# EUROPÄISCHE PATENTSCHRIFT

(11) **EP 2 137 433 B1**
(45) Veröffentlichungstag und Bekanntmachung des Hinweises auf die Patenterteilung: **29.02.2012**
(21) Anmeldenummer: 07846255.3
(22) Anmeldetag: 25.10.2007
(51) Int. Cl.: F16H 37/08, B60K 6/48, B60K 6/543

(54) **ANTRIEBSANORDNUNG MIT EINEM STUFENLOS EINSTELLBAREN TEILGETRIEBE**
DRIVE ARRANGEMENT WITH A CONTINUOUSLY VARIABLE SUB-GEAR MECHANISM
SYSTÈME D'ENTRAÎNEMENT ÉQUIPÉ D'UNE TRANSMISSION PARTIELLE À VARIATION CONTINUE

(30) Priorität: 26.02.2007 DE 102007009631
(43) Veröffentlichungstag der Anmeldung: 30.12.2009
(73) Patentinhaber: Rohs, Ulrich, 52351 Düren (DE)
(72) Erfinder: SCHNEIDER, Heins-Dieter, 53721 Siegburg (DE); VOIGT, Dieter, 52074 Aachen (DE)
(74) Vertreter: Reuther, Martin
(86) Internationale Anmeldenummer: PCT/DE2007/001912
(87) Internationale Veröffentlichungsnummer: WO 2008/104142

(56) Entgegenhaltungen:
- EP-A- 0 908 343
- WO-A-2006/043812
- DE-A1- 10 036 966
- DE-A1- 19 631 294
- DE-A1- 19 828 844
- DE-C- 513 390
- US-A- 2 512 454
- US-A1- 2004 124 021

## Beschreibung

Die Erfindung betrifft eine Antriebsanordnung mit einem stufenlos einstellbaren Teilgetriebe, welches zwei umlaufende Getriebeglieder aufweist, die mittels eines umlaufenden Verbindungsgliedes miteinander wirkverbunden sind, mit einem Hybridantrieb, der einen ersten Antrieb und wenigstens einen weiteren Antrieb umfasst, sowie mit wenigstens einem Abtrieb.

Derartige Antriebsanordnungen, welche antriebsseitig wenigstens zwei voneinander verschiedene Antriebsmotoren aufweisen, sind aus dem Stand der Technik bereits bekannt. Beispielsweise sind zwei Elektromotoren, die voneinander unabhängig angesteuert werden können, einem Planetengetriebe vorgeschaltet. Auch sind heutzutage Hybridantriebe, die einen Verbrennungsmotor und einen Elektromotor umfassen, in aller Munde.

Die DE 198 28 844 A1 offenbart beispielsweise eine Antriebsanordnung bestehend aus einem Verbrennungsmotor, welcher als Energiespeicher den Anker eines zusätzlichen Elektromotor zum Antrieb aufweisen kann, und einem Umschlingungsgetriebe. Die DE 198 28 844 A1, aber auch die WO 2006/043812 A2, welche ebenfalls ein an einen Verbrennungsmotor gekoppeltes Umschlingungsgetriebe aufweist, beinhalten beide in ihren Antriebssträngen weiterhin zusätzliche Schwingscheiben, mittels welcher Bremsenergie gespeichert und für einen Anfahrvorgang dem Antriebsstrang wieder eingespeist werden können.

Es gilt nun derart bekannte Antriebsanordnungen weiter zu entwickeln, sodass deren Nutzen und Effektivität verbessert sind.

Die Aufgabe der Erfindung wird von einer Antriebsanordnung mit einem stufenlos einstellbaren Teilgetriebe, welches zwei umlaufende Getriebeglieder aufweist, die mittels eines umlaufenden Verbindungsgliedes miteinander wirkverbunden sind, mit einem Hybridantrieb, der einen ersten Antrieb und wenigstens einen weiteren Antrieb umfasst, sowie mit wenigstens einem Abtrieb gelöst, wobei wenigstens einer der beiden Antriebe entweder unmittelbar oder mittelbar mittels des stufenlos einstellbaren Teilgetriebes mit dem Abtrieb wechselwirksam verbunden ist.

Die Umschreibung "stufenlos einstellbares Teilgetriebe" erfasst im Sinne der Erfindung nahezu jede Art von CVT-Getrieben (Continuous-Variable-Transmission-Getriebe), die entsprechend vorteilhaft eingesetzt werden können.

Unter dem Begriff "Hybridantrieb" wird vorliegend eine Antriebsart einer Antriebsanordnung oder eines Getriebes verstanden, bei welcher der Antriebsanordnung oder dem Getriebe zumindest zwei verschiedene Antriebe vor-, zwischen- und/oder nachgeschaltet sind.

Die Verschiedenheit zwischen den Antrieben kann sich einerseits bei gattungsgleichen Antrieben über eine unterschiedliche Leistung der einzelnen Antriebe definieren. Andererseits können auch vollkommen verschiedene Motorenkonzepte zum Einsatz kommen. Beispielsweise kann es sich bei dem ersten Antrieb um einen Verbrennungsmotor und bei dem weiteren Antrieb um einen Elektromotor handeln.

Die Umschreibung, dass wenigstens einer der beiden Antriebe der Antriebsanordnung mittelbar mittels des stufenlos einstellbaren Teilgetriebes mit dem Abtrieb wechselwirksam verbunden ist, beschreibt eine Antriebsanordnung, bei welcher in einem Kräftezug zwischen einer der beiden Antriebe und dem Abtrieb das stufenlos einstellbare Teilgetriebe angeordnet ist. Hierbei erfolgt die Kräfteübertragung des Antriebs auf den Abtrieb mittels des stufenlos einstellbaren Teilgetriebes, also mittelbar.

Im Gegensatz hierzu kann hinsichtlich wenigstens eines Antriebs bei der Kräfteübertragung auf ein stufenlos einstellbares Teilgetriebe verzichtet werden. In einem solchen Fall werden die Antriebskräfte beispielsweise mittels einer Kette, mittels eines Zahnriemens oder mittels miteinander kämmenden Zahnrädern zwischen einem der beiden Antriebe und dem Abtrieb direkt übertragen, also unmittelbar. In einem derartigen Kraiftezug ist insbesondere kein stufenlos einstellbares Teilgetriebe vorgesehen.

Eine besonders vorteilhafte Ausführungsvariante sieht vor, dass das stufenlos einstellbare Getriebe ein Kegelreibringgetriebe ist.

Insbesondere im Zusammenhang mit einem Kegelreibringgetriebe ist es vorteilhaft, wenn wenigstens ein Antrieb entweder unmittelbar oder mittelbar mittels des stufenlos einstellbaren Teilgetriebes mit dem Abtrieb wechselwirksam verbunden ist, da ein eine Antriebsanordnung oder ein Getriebe mit einem derartigen Hybridantrieb baulich besonders klein gebaut werden kann. Dies liegt insbesondere daran, dass die Kegellaingen der einzelnen Kegel wesentlich kürzer gestaltet werden können als üblich, weil durch den ersten Antrieb auf Kegelbereiche des Kegelreibringgetriebes verzichtet werden kann, welche beispielsweise für eine bestimmte Übersetzung des Kegelreibringgetriebes verantwortlich sind, wie etwa eine Anfahrübersetzung. Somit baut das Kegelreibringgetriebe besonders kurz, da durch den ersten Antrieb, beispielsweise einen Elektromotor, Kegelbereiche, die für ein Anfahren notwendig wären, nicht benötigt werden.

Deshalb ist es vorteilhaft, wenn einer der beiden Antriebe zum Anfahren genutzt wird, während der zweite der beiden Antriebe ausgekuppelt ist. Hierdurch kann insbesondere eine Art Anfahrübersetzung der vorliegenden Antriebsanordnung realisiert sein. Mit der Bezeichnung "Anfahrübersetzung" ist im Sinne der Erfindung eine Übersetzung gemeint, welche einen ersten Gang eines Getriebes, insbesondere eines Fahrzeuggetriebes, bereitstellt, wie dieses hinlänglich aus dem Stand der Technik bekannt.

Ähnlich vorteilhaft kann einer der beiden Antriebe auch für das Bereitstellen eines Overdrives der Antriebsanordnung genutzt werden, während der zweite der beiden Antriebe ausgekuppelt ist bzw. leer mit läuft oder sonst wie, beispielsweise für die Stromerzeugung, genutzt wird.

Es ist dementsprechend vorteilhaft, wenn der erste Antrieb unter Umgehung des stufenlos einstellbaren Teilgetriebes der Antriebsanordnung anfährt. Hierbei ist es, wie bereits vorstehend erläutert, nicht erforderlich, dass mittels des stufenlos einstellbaren Teilgetriebes ein erster Gang der Antriebsanordnung bereit gestellt wird.

Es ist vorteilhaft, wenn zwischen wenigstens einem Antrieb und einem Abtrieb der Antriebsanordnung ein Planetengetriebe angeordnet ist. Mittels eines Planetengetriebes kann baulich einfach eine Drehrichtungsumkehr im Getriebe realisiert werden. Hierdurch ist beispielsweise ein Rückwärtsgang baulich besonders einfach geschaffen.

Eine weitere Ausführungsvariante sieht vor, dass das stufenlos einstellbare Teilgetriebe zwischen einem ersten Antrieb und einem weiteren Antrieb angeordnet ist. Hierdurch gestaltet sich die Bauweise der vorliegenden Antriebsanordnung nochmals kompakter.

Es ist vorteilhaft, wenn der erste Antrieb und/oder der weitere Antrieb eine erste Antriebsrichtung ermöglichen und der weitere Antrieb zusätzlich eine von der ersten Antriebsrichtung verschiedene, weitere Antriebsrichtung ermöglicht. Hierdurch können einerseits beide Antriebe kumulativ oder alternativ für eine erste Antriebsrichtung eingesetzt werden. Beispielsweise stellt der erste Antrieb einen ersten Vorwärtsgang der Antriebsanordnung und der weitere Antrieb, beispielsweise in Kombination mit einem Kegelreibringgetriebe, weitere Vorwärtsgänge zur Verfügung.

Andererseits kann dann der erste Antrieb eine weitere Antriebsrichtung, welche von der ersten Antriebsrichtung verschieden ist, ermöglichen, wodurch auf eine Drehrichtungsumkehr der ersten Antriebsrichtung mittels einer dafür vorgesehenen Getriebeeinrichtung, beispielsweise mittels eines Planetengetriebes, verzichtet werden kann. Zum Beispiel stellt die weitere Antriebsrichtung einen Rückwärtsgang der Antriebsanordnung bereit.

Vorliegend ist es vorteilhaft, wenn einer der beiden Antriebe ein Elektromotor ist. Mittels eines Elektromotors können weite Lastbereiche der Antriebsanordnung abgedeckt werden. Beispielsweise sind dies Anfahrvorgänge bei Kraftfahrzeugen. Insbesondere ein erster Getriebegang oder ein Rückwärtsgang lassen sich mit dem Elektromotor vorteilhaft umsetzen.

Um Dauerlastbetriebe der Antriebsanordnung zu realisieren, ist es andererseits vorteilhaft, wenn einer der beiden Antriebe ein Verbrennungsmotor ist.

Vorteilhaft ist es, wenn ein erster der beiden Antriebe eine Starteinrichtung für den weiteren Antrieb ist. Beispielsweise kann mittels eines Elektromotors, der den ersten der beiden Antriebe hinsichtlich der vorliegenden Antriebsanordnung darstellt, eine derartige Starteinrichtung bereit gestellt werden. Somit kann auf einen ansonsten üblichen separaten E-Starter für den . Verbrennungsmotor verzichtet werden.

Darüber hinaus ist es vorteilhaft, wenn eine Starteinrichtung und ein zu startender Antrieb mittels des stufenlos einstellbaren Teilgetriebes synchronisiert sind bzw. durch geeignete Wahl des Übersetzungsverhältnisses werden können.

Eine weitere Ausführungsvariante sieht vor, dass das stufenlos einstellbare Teilgetriebe unmittelbar und/oder mittelbar mit einem Sonnenrad eines Planetengetriebes in Wirkkontakt steht. Hierdurch lässt sich im Kräftezug, welcher mittels des stufenlos einstellbaren Teilgetriebes realisiert ist, konstruktiv einfach eine Drehrichtungsumkehr erzielen.

Es ist vorteilhaft, wenn zwischen wenigstens einem der beiden Antriebe und dem Abtrieb eine Kupplung angeordnet ist. Mittels der Kupplung ist es möglich, wenigstens einen der beiden Antriebe insbesondere von dem stufenlos einstellbaren Teilgetriebe zu entkoppeln. Durch das Entkoppeln braucht ein momentan nicht antreibender Antrieb zwangsweise nicht mit bewegt zu werden. Dies ist beispielsweise in einem Anfahrzustand eines Fahrzeuges vorteilhaft, wenn als Antrieb vorerst der Elektromotor im Einsatz ist und der Verbrennungsmotor erst in einem späteren Betriebszustand zugeschalten wird.

Soll zwischen einem der beiden Antriebe und einem Abtrieb eine drehrichtungsumkehrfreie Kräfteübertragung erfolgen, ist es vorteilhaft weil konstruktiv einfach, wenn zwischen wenigstens einem der beiden Antriebe und dem Abtrieb eine Kette oder ein Antriebsriemen angeordnet ist.

Soll jedoch baulich wenig aufwändig eine Drehrichtungsumkehr realisiert sein, ist es vorteilhaft, wenn zwischen wenigstens einem der beiden Antriebe und dem Abtrieb unmittelbar miteinander kämmende Zahnräder angeordnet sind.

Weitere Vorteile, Ziele und Eigenschaften vorliegender Erfindung werden anhand der Beschreibung anliegender Zeichnung erläutert, in welcher Fahrzeugantriebsanordnungen dargestellt sind, die einen ersten und einen zweiten Antrieb aufweisen, und bei welchen zwischen wenigstens einem von mehreren Antrieben und einem Abtrieb ein Kegelreibringgetriebe gekoppelt werden kann.

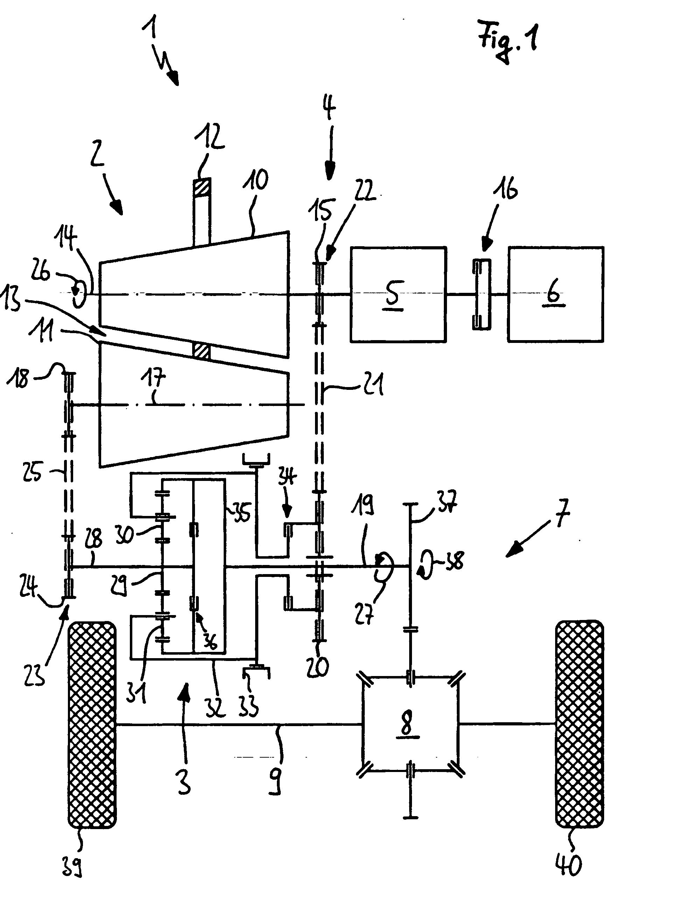

Es zeigen
- Figur 1: schematisch ein erstes Ausführungsbeispiel einer Fahrzeugantriebsanordnung mit einem Kegelreibringgetriebe, Elektromotor und einem dem Kegelreibringgetriebe zuschaltbaren Verbrennungsmotor;

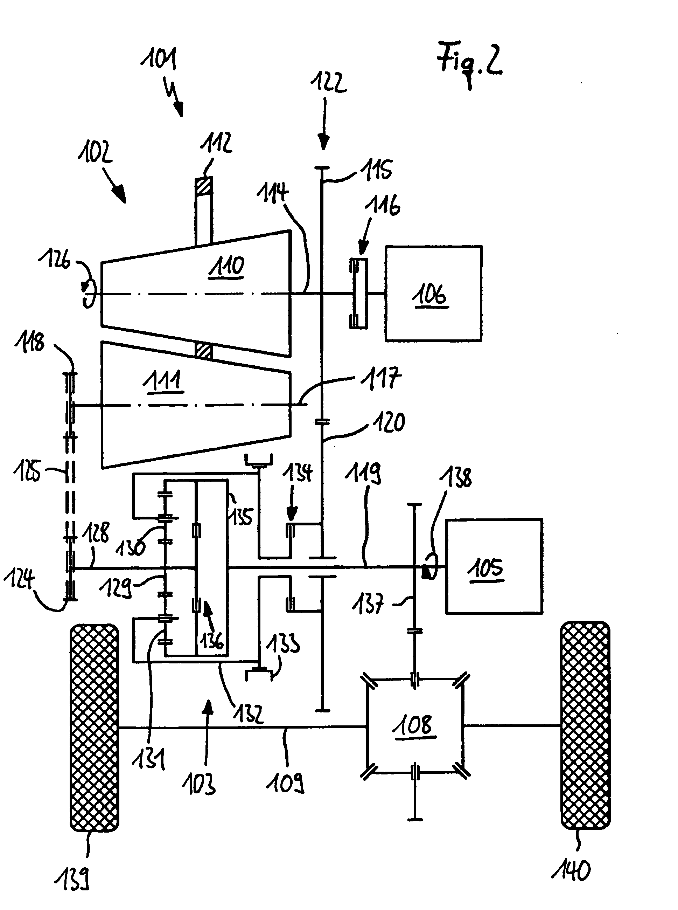

- Figur 2: schematisch ein weiteres Ausführungsbeispiel einer Fahrzeugantriebsanordnung mit einem Kegelreibringgetriebe, mit einem dem Kegelreibringgetriebe zuschaltbaren Verbrennungsmotor und mit einem dem Kegelreibringgetriebe nachgeschalteten Elektromotor, der direkt mit einem Abtrieb der Fahrzeugantriebsanordnung wechselwirkt;

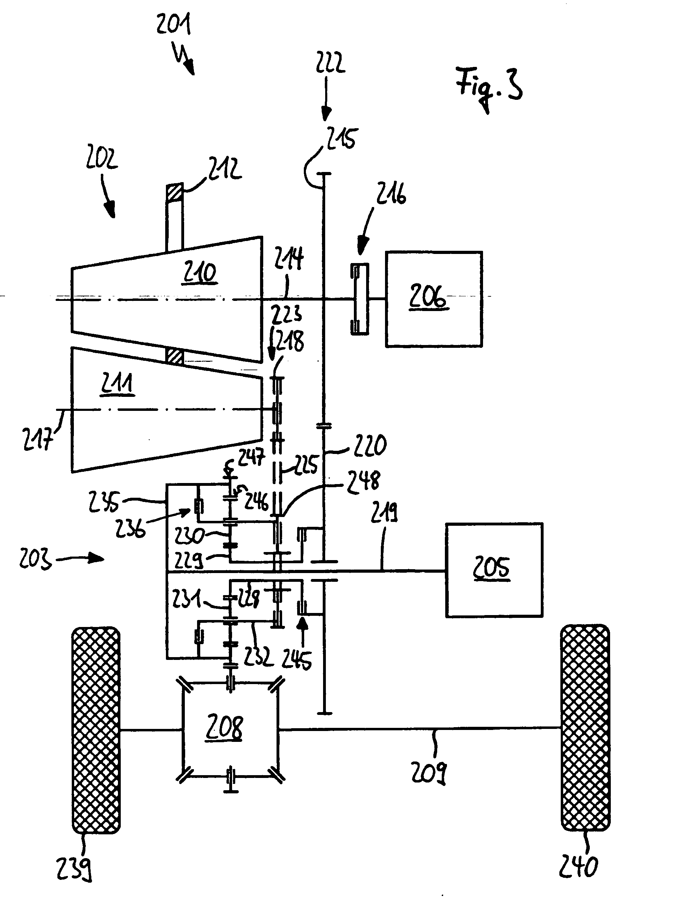

- Figur 3: schematisch ein weiteres Ausführungsbeispiel einer Fahrzeugantriebsanordnung mit einem Kegelreibringgetriebe, mit einem dem Kegelreibringgetriebe zuschaltbaren Verbrennungsmotor und mit einem dem Kegelreibringgetriebe nachgeschalteten Elektromotor, der über ein Planetengetriebe mit einem Abtrieb der Fahrzeugantriebsanordnung wechselwirkt;

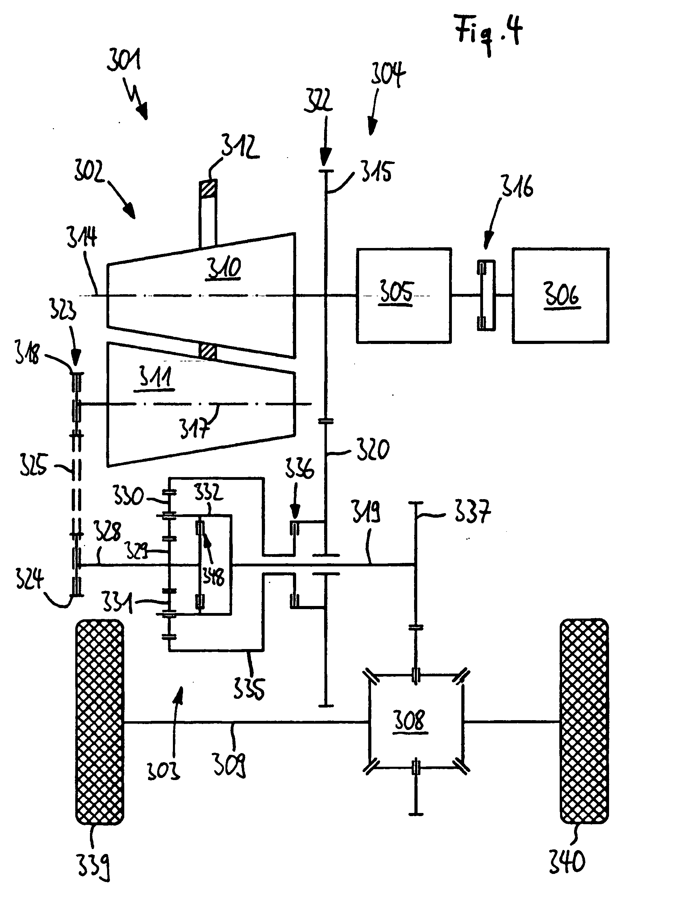

- Figur 4: schematisch eine weiteres Ausführungsbeispiel einer Fahrzeugantriebsanordnung mit einem Kegelreibringgetriebe, mit einem dem Kegelreibringgetriebe zuschaltbaren Verbrennungsmotor oder Elektromotor, die entweder mittelbar mittels miteinander kämmenden Zahnrädern oder unmittelbar mittels einem Kettentrieb mit einem Abtrieb der Fahrzeugantriebsanordnung wechselwirken;

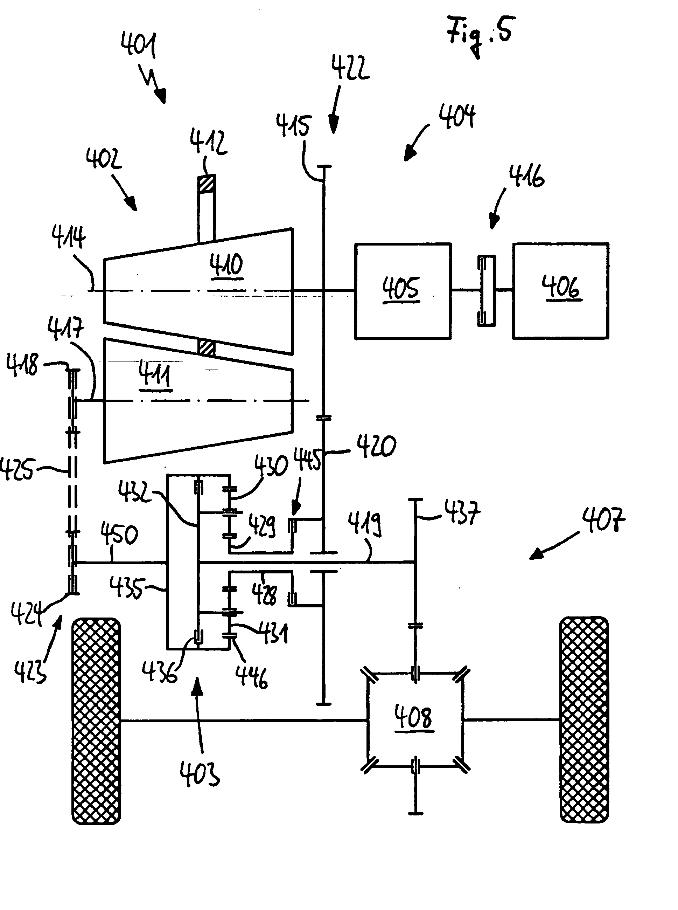

- Figur 5: schematisch ein alternatives Ausführungsbeispiel einer Fahrzeugantriebsanordnung mit einem Kegelreibringgetriebe und einem dem Kegelreibringgetriebe zuschaltbaren Verbrennungsmotor oder Elektromotor;

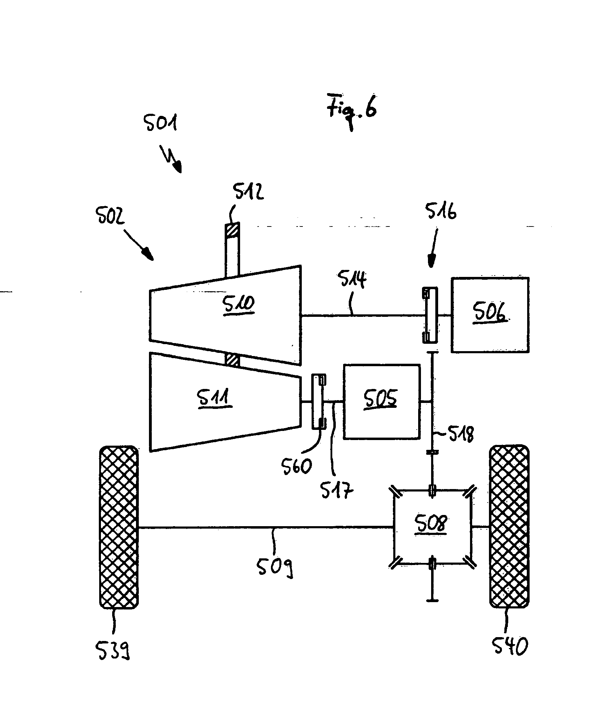

- Figur 6: schematisch ein Ausführungsbeispiel einer besonders einfach aufgebauten Fahrzeugantriebsanordnung mit einem Kegelreibringgetriebe, mit einem dem Kegelreibringgetriebe vorgeschalteten entkoppelbaren Verbrennungsmotor und mit einem dem Kegelreibringgetriebe nachgeschalteten entkoppelbaren Elektromotor;

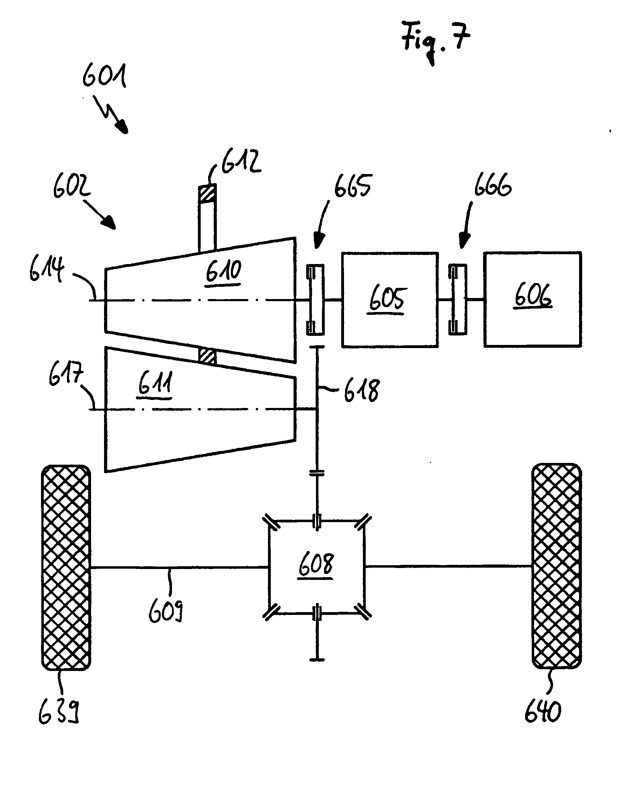

- Figur 7: schematisch ein Ausführungsbeispiel einer weiteren besonders einfach aufgebauten Fahrzeugantriebsanordnung mit einem Verbrennungsmotor und einem Elektromotor, die einem Kegelreibringgetriebe entkoppelbar vorgeschaltet sind;

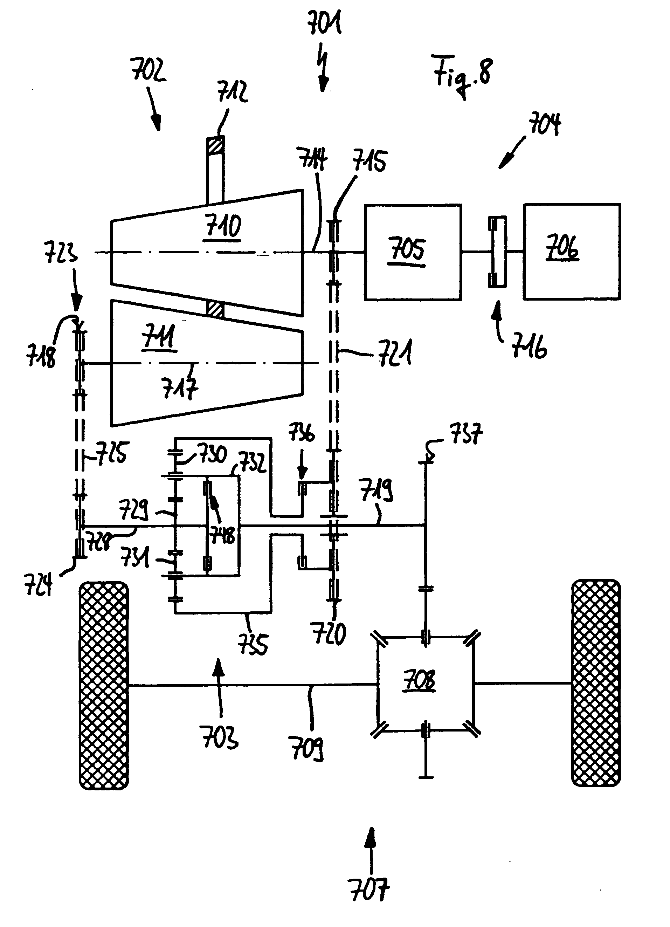

- Figur 8: schematisch eine weitere Fahrzeugantriebsanordnung mit einem Kegelreibringgetriebe, mit einem dem Kegelreibringgetriebe zuschaltbaren Verbrennungsmotor oder Elektromotor, die entweder mittelbar oder unmittelbar jeweils mittels eines Kettentriebs mit einem Abtrieb der Fahrzeugantriebsanordnung wechselwirken;

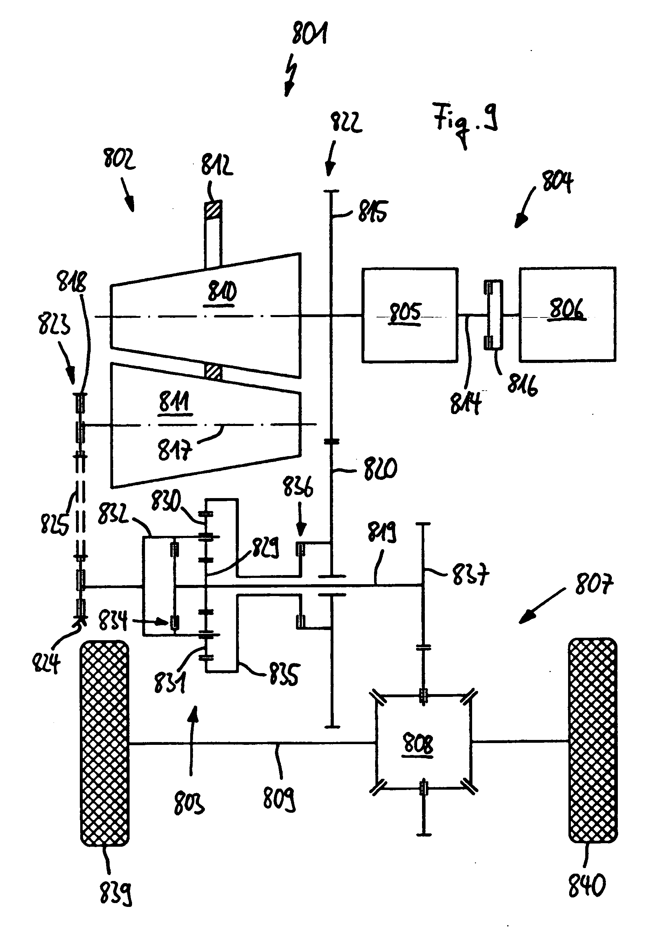

- Figur 9: schematisch ein weiteres Ausführungsbeispiel einer Fahrzeugantriebsanordnung mit einem Kegelreibringgetriebe, mit einem dem Kegelreibringgetriebe zuschaltbaren Verbrennungsmotor und mit einem dem Kegelreibringgetriebe nachgeschalteten Elektromotor, der über ein alternatives Planetengetriebe mit einem Abtrieb der Fahrzeugantriebsanordnung wechselwirkt; und

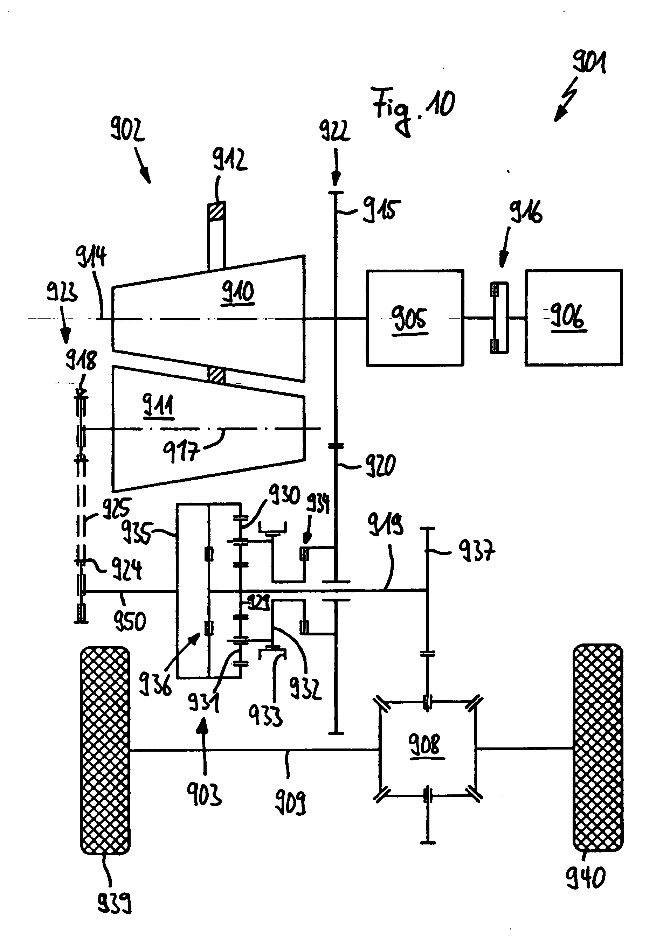

- Figur 10: schematisch ein Ausführungsbeispiel einer Fahrzeugantriebsanordnung mit einem Kegelreibringgetriebe, mit einem dem Kegelreibringgetriebe zuschaltbaren Verbrennungsmotor und mit einem dem Kegelreibringgetriebe nachgeschalteten Elektromotor, der über ein weiteres alternatives Planetengetriebe mit einem Abtrieb der Fahrzeugantriebsanordnung wechselwirkt.

Die in der Figur 1 gezeigte Antriebsanordnung 1 besteht im Wesentlichen aus einem an sich aus dem Stand der Technik bekannten Kegelreibringgetriebe 2 und einem Planetengetriebe 3, wobei antriebsseitig 4 sowohl ein Elektromotor 5 als auch ein Verbrennungsmotor 6 angeflanscht sind. Abtriebsseitig 7 ist ein Differenzialgetriebe 8 an einer Antriebsachse 9 eines Fahrzeuges (hier nicht dargestellt) vorgesehen.

Das Kegelreibringgetriebe 2 weist einen Eingangskegel 10, einen Ausgangskegel 11 und einen diese beiden Kegel 10, 11 verbindenden Reibring 12 auf. Der Reibring 12 läuft stufenlos einstellbar in einem Spalt 13 zwischen den beiden Kegeln 10 und 11 hin und her, wobei hierdurch eine stufenlos einstellbare Getriebeübersetzung realisiert ist. Der Reibring 12 umgreift hierbei den Eingangskegel 10.

Zwischen dem Elektromotor 5 und dem Verbrennungsmotor 6 ist eine Antriebswellenkupplung 16 angeordnet, mit deren Hilfe bei Bedarf der Verbrennungsmotor 6 antriebsseitig 4 von der Antriebswelle 14 entkoppelt werden kann.

Der Eingangskegel 10, an welchem der Elektromotor 5 und der Verbrennungsmotor 6 angeflanscht sind, rotiert um eine Antriebsachse 14. Zwischen dem Eingangskegel 10 und den beiden Motoren 5, 6 ist ein Antriebswellenritzel 15 vorgesehen.

Der Ausgangskegel 11 des Kegelreibringgetriebes 2 rotiert um eine Abtriebswelle 17 des Kegelreibringgetriebes 2. An der Abtriebswelle 17 ist ein Abtriebswellenritzel 18 befestigt.

Mittels des Antriebswellenritzels 15 oder des Abtriebswellenritzels 18 können Antriebskräfte der Motoren 5, 6 unter Einbeziehung des Planetengetriebes 3 und Umgehung des Kegelreibringgetriebes 2 direkt bzw. entsprechend indirekt unter Einbeziehung des Kegelreibringgetriebes 2 und des Planetengetriebes 3 auf eine Hauptabtriebswelle 19 übertragen wellen.

Hierzu ist das Planetengetriebe 3 über eine Kupplung 34 mit einem ersten Kräfteeingangsritzel 20 verbunden, welches mittels einer Antriebskette 21 mit dem Antriebswellenritzel 15 korrespondiert. Die Baugruppeneinheit "Antriebswellenritzel 15 - Kräfteeingangsritzel 20 - erste Antriebskette 21" realisiert einen ersten Kräftestrang 22.

Ein zweiter Kräftestrang 23 ist mittels der Baugruppeeinheit "Abtriebswellenritzel 18 - zweites Kräfteeingangsritzel 24 - zweite Antriebskette 25" realisiert.

Mittels des ersten Kräftestrangs 22 besteht die Möglichkeit, Antriebskräfte der Motoren 5, 6 unmittelbar auf die Hauptabtriebswelle 19 zu übertragen. Der zweite Kräftestrang 23 ist dafür vorgesehen, Antriebskräfte der Motoren 5, 6 über das Kegelreibringgetriebe 2 auf die Hauptabtriebswelle 19 zu übertragen. Bei letzterer Möglichkeit kann die Getriebeübersetzung bedarfsgerecht geändert werden.

Weder beim dem Einsatz des ersten Kräftestrangs 22 noch beim Einsatz des zweiten Kräftestrangs 23 findet eine Drehrichtungsänderung hinsichtlich der Antriebswelle 14 und der Hauptabtriebswelle 19 statt.

Ist jedoch eine derartige Drehrichtungsänderung zwischen der Antriebswellendrehrichtung 26 und einer Hauptabtriebswellendrehrichtung 27 gewünscht bzw. erforderlich, kann das Planetengetriebe 3 entsprechend in den Kraftfluss eingebunden werden, wie nachfolgend beispielsweise anhand Figur 3 erläutert.

Das Planetengetriebe 3 umfasst eine Sonnenradwelle 28. An der Sonnenradwelle 28 befindet sich das Sonnenrad 29 des Planetengetriebes 3. Das Sonnenrad 29 kämmt hierbei mit Planetenrädern 30 und 31 (in dieser Darstellung sind lediglich zwei Planetenräder gezeigt).

Diese sind an einem Planetenradträger 32 gelagert. Der Planetenradträger 32 wiederum ist drehbar um die Hauptabtriebswelle 19 gelagert und kann an einem Getriebegehäuse 33 der Antriebsanordnung 1 festgelegt werden, sodass eine Rotation des Planetenträgers 32 unterbunden ist.

Darüber hinaus verfügt der Planetenradträger 32 über eine Planetenradträgerkupplung 34, mittels welcher der Planetenradträger 32 mit dem ersten Kraifteeingangsritzel 20 gekoppelt bzw. entkoppelt werden kann.

Das Planetengetriebe 3 verfügt zudem über ein Hohlrad 35, welches einerseits an der Hauptabtriebswelle 19 befestigt ist und welches andererseits mittels einer Hohlradkupplung 36 mit der Sonnenradwelle 28 des Planetengetriebes 3 gekoppelt bzw. entkoppelt werden kann.

Soll beispielsweise eine Kräfteübertragung zwischen einem der Motoren 5 oder 6 ohne Zwischenschaltung des Kegelreibringgetriebes 2 direkt von der Antriebswelle 14 auf das Abtriebsritzel 37 der Hauptabtriebswelle 19 übertragen werden, ist die Planetenradträgerkupplung 34 geschlossen, sodass ein Kräftefluss zwischen dem ersten Kraifteeingangsritzel 20 und dem Planetenträger 32 besteht. Die Kräfte werden in diesem Fall von dem Planetenträger 32 auf die Planeten 30 und 31 und von dort auf das Hohlrad 35 übertragen, welches an der Hauptabtriebswelle 19 befestigt ist. Die Hohlradkupplung 36 ist dabei geöffnet, so dass das Hohlrad 35 und die Sonnenradwelle 28 voneinander entkoppelt sind. Über die Hauptabtriebswelle 19 gelangen die Antriebskräfte schließlich an das Hauptabtriebsritzel 37 und von dort an das Differentialgetriebe 8. Das Kegelreibringgetriebe 2 sowie das Sonnenrad 29 drehen hierbei mit, so dass Drehmoment auch über das Sonnenrad 29 und mithin das Kegelreibringgetriebe 2 ergänzend übertragen wird.

Bei der Kräfteübertragung mittels der ersten Antriebskette 21 zwischen dem Antriebswellenritzel 15 und des ersten Kraifteeingangsritzels 20 bleiben die Antriebswellendrehrichtung 26 und die Hauptabtriebswellendrehrichtung 27 nicht identisch, da beim vorstehend beschriebenen Kräftefluss über das Planetengetriebe 3 eine Drehrichtungsänderung stattfindet.

Erfolgt der Kräftefluss zwischen den Motoren 5 oder 6 und der Hauptabtriebswelle 19 über das Kegelreibringgetriebe 2, ist die Planetenradträgerkupplung 34 geöffnet, sodass das erste Kräfteeingangsritzel 20 ohne Kräfteübertragung auf das Hohlrad 32 lediglich umläuft.

Ist bei einem derartigen Kräftefluss die Hohlradkupplung 36 gekoppelt, so werden die von der Abtriebswelle 17 des Kegelreibringgetriebes 2 mittels der zweiten Antriebskette 25 auf die Sonnenradwelle 28 übertragenen Kräfte direkt über die Hohlradkupplung 36 und die Hauptabtriebswelle 19 auf das Hauptabtriebsritzel 37 übertragen. Hierbei ist keine Drehrichtungsumkehr zwischen der Antriebswelle 14 und dem Hauptabtriebsritzel 37 realisiert.

Ist dagegen die Hohlradkupplung 36 des Planetengetriebes 3 entkoppelt, wird der Kräftefluss von der Sonnenradwelle 28 über das Sonnenrad 29, das Hohlrad 35 und die Hauptabtriebswelle 19 auf das Hauptabtriebsritzel 37 übertragen. Hierbei ist der Planetenträger 32 an dem Getriebegehäuse 33 der Antriebsanordnung 1 festgelegt, so dass der Planetenträger 32 nicht umläuft. Bei dieser Variante liegt mittels des Planetenrades 3 eine Drehrichtungsumkehr zwischen der Antriebswellendrehrichtung 26 der Antriebswelle 14 und der Hauptabtriebswellendrehrichtung 27 der Hauptabtriebswelle 19 vor, sodass die Hauptabtriebswelle 19 und damit das Hauptabtriebsritzel 37 eine entgegengesetzte Hauptabtriebswellendrehrichtung 38 zu der Drehrichtung 26 der Antriebswelle 14 aufweist.

Durch den vorliegenden Aufbau der Antriebsanordnung 1 kann auf baulich besonders einfache Art eine Kräfteübertragung zwischen einem der Motoren 5 oder 6 auf direktem Wege an das Differenzialgetriebe 8 und damit auf die Antriebswelle 9 der beiden Räder 39 und 40 erzielt werden.

Andererseits werden die Kräfteübertragung und die Drehzahl mittels des Kegelreibringgetriebes 2 variiert. Mittels des vorliegenden Planetengetriebes 3, welches zwischen der Antriebswelle 14 und dem Differenzialgetriebe 8 zwischen geschaltet ist, kann auf baulich besonders einfache Weise eine Drehrichtungsumkehr, wie vorstehend beschrieben, erzielt werden.

Es versteht sich, dass einer der Motoren 5, 6 auch im Bereich der Hauptabtriebswelle 19 vorgesehen und über einen Riemen, Ketten oder ähnliches mit der Antriebswelle 14 verbunden sein könnte und/oder anstelle der Antriebsketten 21, 25 die Ritzelpaare 15, 20 und/oder 18, 24 direkt miteinander kämmen könnten.

Die in der Figur 2 gezeigte Antriebsanordnung 101 hat im Wesentlichen den gleichen Aufbau wie die Antriebsanordnung 1 aus der Figur 1.

Die Antriebsanordnung 101 weist ebenfalls ein Kegelreibringgetriebe 102 sowie ein Planetengetriebe 103 auf. Auch sind an der Antriebsanordnung 101 ein Elektromotor 105 und ein Verbrennungsmotor 106 vorgesehen. Jedoch befinden sich die Motoren 105 und 106 nicht auf einer gemeinsamen Antriebswelle 114. Lediglich der Verbrennungsmotor 106 ist an der Antriebswelle 114 des Kegelreibringgetriebes 102 angeordnet. Der Elektromotor 105 ist unmittelbar an der Hauptantriebswelle 119 des Getriebes 101 befestigt.

Darüber hinaus kämmen ein Antriebswellenritzel 115 und ein erstes Kräfteeingangsritzel 120 direkt miteinander, sodass eine Antriebskette zwischen diesen Ritzeln 115, 120 nicht erforderlich ist. Durch das unmittelbare Kämmen der beiden Ritzel 115 und 120 findet hinsichtlich der Antriebswelle 114 und der Hauptabtriebswelle 119 eine Drehrichtungsumkehr statt, sodass bei einer Antriebswellendrehrichtung 126 die Hauptabtriebswelle 119 in einer entgegengesetzten Hauptabtriebswellendrehrichtung 138 rotiert.

Das Kegelreibringgetriebe 102 verfügt über einen Eingangskegel 110 und einen Ausgangskegel 111, wobei die beiden Kegel 110, 111 mittels eines Reibrings 112 miteinander kommunizieren. Der Reibring 112 ist gegenüber den beiden Kegel 110, 111 hinsichtlich der Antriebswelle 114 axial verlagerbar.

Der Ausgangskegel 111 rotiert um und an einer Abtriebswelle 117, an deren einem Ende ein Abtriebswellenritzel 118 vorgesehen ist. Mittels einer Antriebskette 125 werden Antriebskräfte, welche von dem Verbrennungsmotor 106 erzeugt werden, auf ein zweites Kräfteeingangsritzel 124 der Hauptabtriebswelle 119 übertragen.

Der Verbrennungsmotor 106 ist mittels einer Antriebswellenkupplung 116 koppelbar bzw. entkoppelbar mit der Antriebswelle 114 verbunden.

Im Bereich des Planetengetriebes 103 ist eine Sonnenradwelle 128 als ein Teilbereich der Hauptabtriebswelle 119 anzusehen. An der Sonnenradwelle 128 ist ein Sonnenrad 129 montiert. Das Sonnenrad 129 steht hierbei mit Planetenrädern 130, 131 des Planetengetriebes 103 in Kontakt. Die Pianetenräder 130, 131 sind an einem Planetenradträger 132 derart gelagert, dass sie mit einem Hohlrad 135 des Planetengetriebes 103 in unmittelbarem Kontakt stehen.

Darüber hinaus ist der Planetenradträger 132 über eine Planetenträgerkupplung 134 mit dem ersten Kräfteeingangsritzel 120 verbunden.

Das Planetengetriebe 103 weist eine Hohlradkupplung 136 auf. Mittels der Hohlradkupplung 136 kann der Kräftefluss im Bereich des Planetengetriebes 103 unmittelbar von der Sonnenradwelle 128 über die geschlossene Hohlradkupplung 136 auf das Hohlrad 135 und damit weiter über die Hauptabtriebswelle 119 auf das Hauptabtriebsritzel 137 übertragen werden. In diesem Fall läuft der Elektromotor 105 leerlaufend mit. Er kann in diesem Zustand beispielsweise zur Stromerzeugung genutzt werden.

Der Kräftefluss wird dann weiter von dem Hauptabtriebsritzel 137 auf das Differenzialgetriebe 108 und von dort aus mittels der Antriebsachse 109 auf die beiden Antriebsräder 139 und 140 weitergeleitet.

Ist die Hohlradkupplung 136 jedoch geöffnet, sodass kein Kraftfluss von der Sonnenradwelle 128 direkt auf das Hohlrad 135 übertragen werden kann, fließen die Antriebskräfte von der Sonnenradwelle 128 über das Sonnenrad 129 auf die Planetenräder 130, 131 und weiter auf das Hohlrad 135. Hierbei wird eine Drehrichtungsumkehr zwischen der Sonnenradwelle 128 und der Hauptabtriebswelle 119 im Bereich des Hauptabtriebsritzels 137 erzielt. Dies ist bei geschlossener Hohlradkupplung 136 nicht der Fall, da die Drehrichtung der Sonnenradwelle 128 und der Hauptabtriebswelle 119 identisch bleibt. Bei frei umlaufendem Planetenträger 132 wird dann Drehmoment sowohl über das Sonnenrad 129 und das Kegelreibringgetriebe 102 als auch über die Planentenräder 131 übertragen. Die Planetenradträgerkupplung 134 muss dabei geschlossen sein.

Ist die Hohlradkupplung 136 geöffnet, kann in einer besonderen Betriebsvariante der Planetenträger 132 an dem Gehäuse 133 des Getriebes 101 festgelegt und auch die Kupplung 134 geöffnet werden, sodass eine Rotation des Planetenträgers 132 unterbunden ist.

Es versteht sich, dass bei diesem Ausführungsbeispiel einerseits die Motoren 105, 106 beide an der Antriebswelle 114 vorgesehen sein können. Andererseits könnte eine Kräfteübertragung zwischen dem Antriebswellenritzel 115 und dem ersten Hauptabtriebswellenritzel 120 auch über eine Antriebskette erfolgen.

Die in der Figur 3 alternativ gezeigte Antriebsanordnung 201 umfasst ein Kegelreibringgetriebe 202, ein Planetengetriebe 203, ein Differenzialgetriebe 208, welches mit einer Antriebsachse 209 in Kontakt steht, die zwei Antriebsräder 239 und 240 antreibt. Angetrieben wird die Antriebsanordnung 201 wahlweise durch einen Elektromotor 205 oder einen Verbrennungsmotor 206.

Das Kegelreibringgetriebe 202 besteht im Wesentlichen aus einem Eingangskegel 210, einem Ausgangskegel 211 und einem Reibring 212. Der Eingangskegel 210 läuft um eine Antriebswelle 214 um. An der Antriebswelle 214 ist der Verbrennungsmotor 206 mittels einer Kupplung 216 angeordnet. Der Ausgangskegel 211 läuft um einer Abtriebswelle 217 um. Die Abtriebswelle 217 hat an einem ihrer Enden ein Abtriebswellenritzel 218.

Um eine von dem Verbrennungsmotor 206 in die Antriebsanordnung 201 eingeleitete Antriebskraft auf eine Hauptabtriebswelle 219 zu übertragen, kann einerseits ein erster Kräftestrang 222 und andererseits ein zweiter Kräftestrang 223 eingesetzt werden.

Der erste Kräftestrang 222 wird hierbei im Wesentlichen durch das Antriebswellenritzel 215 und ein erstes Kräfteeingangsritzel 220 gebildet. Das erste Kräfteeingangsritzel 220 steht mittels einer Sonnenradwellenkupplung 245 mit einer Sonnenradwelle 228 des Planetengetriebes 203 in Verbindung. Dies bedeutet, dass der erste Kräftestrang 222 mittels der Sonnenradwellenkupplung 245 Kräfte auf das Planetengetriebe 203 übertragen kann. Bei geöffneter Sonnenradwellenkupplung 245 ist dies nicht möglich.

An dem der Sonnenradwellenkupplung 245 gegenüberliegenden Ende der Sonnenradwelle 228 ist ein Sonnenrad 229 des Planetengetriebes 203 angeordnet. Das Sonnenrad 229 steht mit Planetenrädern 230, 231 in Kontakt. Die Planetenräder 230, 231 sind an einem Planetenträger 232 gelagert. Der Planetenträger 232 weist an einem Ende eine Hohlradkupplung 236 auf. Mittels der Hohlradkupplung 236 kann der Planetenträger 232 mit einem Hohlrad 235 des Planetengetriebes 203 gekoppelt oder entkoppelt werden.

Das Hohlrad 235 steht mit einer Hohlradinnenverzahnung 246 mit den Planetenrädern 230 und 231 des Planetengetriebes 203 im Eingriff. Mit einer Hohlradaußenverzahnung 247 steht das Hohlrad 235 mit dem Differenzialgetriebe 208 in Wirkkontakt.

Der zweite Kräftestrang 223 besteht im Wesentlichen aus dem Abtriebswellenritzel 218, einer Antriebskette 225 und einem Planetenradträgerritzel 248. Das Planetenradträgerritzel 248 ist an dem Planetenradträger 232 befestigt.

Durch die vorstehend beschriebene Antriebsanordnung 201 ist eine Kräfteübertragung ausgehend vom Verbrennungsmotor 206 zum einen über das Kegelreibringgetriebe 202 und das Planetengetriebe 203 auf das Differenzialgetriebe 208 möglich. Mittels des Planetengetriebes 203 ist eine Umkehrung der Drehrichtung möglich, sodass einerseits Vorwärtsgänge und andererseits Rückwärtsgänge realisiert werden können. Ist die Hohlradkupplung 236 geschlossen, dass heißt, ist das Hohlrad 235 im direkten Eingriff mit dem Planetenträger 232, findet zwischen der Antriebswelle 214 und der Hohlradaußenverzahnung 247 keine Drehrichtungsumkehr statt. Ist die Hohlradkupplung 236 jedoch geöffnet, findet eine Kräfteübertragung zwischen dem Planetenradträger 232 und dem Hohlrad 235 nicht über die Kupplung 236 statt. Vielmehr werden die Antriebskräfte mittels der Planetenräder 230, 231 auf die Hohlradinnenverzahnung 246 übertragen, wodurch eine Drehrichtungsumkehr, wie bereits vorstehend erläutert, stattfinden. Die Planetenradträgerkupplung 245 muss dabei geschlossen sein.

Eine Kräfteübertragung zwischen dem Elektromotor 205 und dem Differenzialgetriebe 208 findet ebenfalls über das Planetengetriebe 203 statt. Auch hier kann ein Vorwärtsgang und ein Rückwärtsgang realisiert werden, wobei Drehrichtungsumkehrungen sowie Drehzahländerungen der Antriebsanordnung 201 unmittelbar durch Steuerung des Elektromotors 205 vorgenommen werden und nicht mittels des Planetengetriebes 203 bzw. des Kegelreibringgetriebes 202, wie es im Falle des Verbrennungsmotors 206 geschehen kann. Eine gleichsinnige Drehrichtung zwischen der Hauptabtriebswelle 219, welche auch gleichzeitig die Antriebswelle des Elektromotors 205 darstellt und der Hohlradaußenverzahnung 247 ist erzielt, wenn die Hohlradkupplung 236 geschossen ist. Bei geöffneter Hohlradkupplung 236 wird der Kräftefluss zwischen dem Elektromotor 205 und der Hohlradaußenverzahnung 247 über die Planetenräder 230, 231 geschlossen. Dabei kehrt sich die Drehrichtung der Hauptabtriebswelle 219 hinsichtlich der Hohlradaußenverzahnung 247 um. Die Planetenradträgerkupplung 245 muss dabei geschlossen sein.

Die in der Figur 4 gezeigte Antriebsanordnung 301 weist ebenfalls ein Kegelreibringgetriebe 302, ein Planetengetriebe 303, einen Elektromotor 305 sowie einen Verbrennungsmotor 306 an der Eingangsseite 304 und ein Differenzialgetriebe 308 mit einer Antriebsachse 309 an der Abtriebsseite 307, an welcher Antriebsräder 339 und 340 angeordnet sind, auf.

Das Kegelreibringgetriebe 302 umfasst einen Eingangskegel 310, einen Ausgangskegel 311 sowie einen Reibring 312, der den Kontakt zwischen den beiden Kegeln 310, 311 herstellt. Der Eingangskegel 310 ist auf einer Antriebswelle 314 gelagert, welche unmittelbar von dem Elektromotor 305 und/oder dem Verbrennungsmotor 306 angetrieben wird. Um eine Kräfteübertragung von einem der Motoren 305, 306 auf eine Hauptabtriebswelle 319 zu erzielen, ohne dabei das Kegelreibringgetriebe 302 zu verwenden, ist auf der Antriebswelle 314 ein Antriebswellenritzel 315 befestigt. Das Antriebswellenritzel 315 bildet mit einem ersten Kräfteeingangsritzel 320 einen ersten Kräftestrang 322, worüber ein Kräftefluss zwischen der Antriebswelle 314 und der Hauptabtriebswelle 319 etabliert werden kann.

Sollen die Antriebskräfte über das Reibringgetriebe 302 zu der Hauptabtriebswelle 319 geleitet werden, geschieht dies mittels eines zweiten Kräftestrangs 323, der im Wesentlichen aus einem Abtriebswellenritzel 318, einem zweiten Kräfteeingangsritzel 324 und einer Antriebskette 325 besteht, mittels welcher eine Verbindung zwischen den beiden Ritzel 318 und 324 hergestellt ist.

Bei einer direkten Kräfteübertragung ohne Kegelreibringgetriebe 302 wird eine Hohlradkupplung 336 geschlossen. Auf diese Weise können von dem ersten Kräfteeingangsritzel 320 Antriebskräfte auf ein Hohlrad 335 des Planetengetriebes 303 übertragen werden. Hierbei werden die Antriebskräfte auf Planetenräder 330 und 331 und von diesen auf ein Sonnenrad 329 übertragen. Von dort aus werden die Antriebskräfte auf die Sonnenradwelle 328 übertragen und gelangen bei einer geschlossenen Planetenträgerkupplung 348 über einen Planetenträger 332 auf die Hauptabtriebswelle 319 und von dort aus über das Hauptabtriebsritzel 337 an das Differenzialgetriebe 308.

Soll der Kräftefluss über das Kegelreibringgetriebe 302 erfolgen, ist die Hohlradkupplung 336 geöffnet und die Planetenradträgerkupplung 348 geschlossen. Hierbei gelangen die Antriebskräfte über den zweiten Kräftestrang 323 an die Sonnenradwelle 328 und über die Hohlradkupplung 348 auf die Hauptabtriebswelle 319 und von dort aus über das Hauptabtriebsritzel 337 an das Differenzialgetriebe 308. Durch Öffnen der Planetenträgerkupplung 348 kann die Drehrichtung umgekehrt und ein Rückwärtsgang realisiert werden. Da der Rückwärtsgang nur kurzzeitig genutzt wird, sind etwaige Verluste durch das Planetengetriebe 303 vertretbar.

Die in der Figur 5 dargestellte Antriebsanordnung 401 besteht im Wesentlichen aus einem Kegelreibringgetriebe 402, einem Planetengetriebe 403 sowie einem Differenzialgetriebe 408. An der Antriebsseite 404 der Antriebsanordnung 401 sind ein Elektromotor 405 sowie ein Verbrennungsmotor 406 an einer Antriebswelle 414 vorgesehen.

Zwischen dem Verbrennungsmotor 406 und der Antriebswelle 414 ist eine Antriebswellenkupplung 416 vorgesehen, sodass der Verbrennungsmotor 406 bei Bedarf von der Antriebswelle 414 entkoppelt werden kann. Beispielsweise ist dies vorteilhaft, wenn Antriebskräfte nur mittels des Elektromotors 405 auf die Antriebswelle 414 einwirken sollen. In dem Fall, in welchem der Verbrennungsmotor 406 die Antriebskräfte zur Verfügung stellen soll, ist die Antriebswellenkupplung 416 geschlossen, wobei der Elektromotor 405 entweder nur mitläuft und ggf. Strom generiert oder unterstützend weitere Antriebskräfte auf die Antriebswelle 414 überträgt.

An der Antriebswelle 414 ist sowohl der Eingangskegel 410 des Kegelreibringgetriebes 402 als auch ein Antriebswellenritzel 415 angebracht.

Das Kegelreibringgetriebe 402 weist neben dem Eingangskegel 410 einen Ausgangskegel 411 auf, wobei Eingangskegel 410 und Ausgangskegel 411 mittels eines Reibringes 412 wirkverbunden sind. Der Ausgangskegel 411 rotiert um eine Abtriebswelle 417 des Kegelreibringgetriebes 402. Die Abtriebswelle 417 steht mit einem Abtriebswellenritzel 418 und einer Antriebskette 425 mit einem Kräfteeingangsritzel 424 einer Hohlradwelle 450 eines Hohlrades 435 des Planetengetriebes 403 in Verbindung.

Mittels der Verbindung über die beiden Ritzel 418, 424 und der Antriebskette 425 ist ein zweiter Kräftestrang 423 der Antriebsanordnung 401 gebildet. Ein erster Kräftestrang 422 der Antriebsanordnung 401 bilden das Antriebswellenritzel 415 und ein erstes Kräfteeingangsritzel 420.

Sowohl mittels des ersten Kräftestrangs 422 als auch mittels des zweiten Kraiftestrangs 423 können wahlweise Antriebskräfte von der Antriebsseite 404 zur Abtriebsseite 407 der Antriebsanordnung 401 übermittelt werden.

Das Hohlrad 435 korrespondiert über eine Hohlradinnenverzahnung 446 mit Planetenrädern 430 und 431, wobei Antriebskräfte von den Planetenrädern 430, 431 auf einen Planetenträger 432 übertragen werden. Der Planetenträger 432 ist unmittelbar mit einer Hauptabtriebswelle 419 verbunden, die mittels eines Hauptabtriebsritzels 437 mit dem Differenzialgetriebe 408 in Kontakt steht.

Das Planetengetriebe 403 weist zwischen dem Hohlrad 435 und dem Planetenträger 432 eine Hohlradkupplung 436 auf. Ist die Hohlradkupplung 436 geschlossen und werden Antriebskräfte mittels des zweiten Kräftestrangs 423 übertragen, werden die Antriebskräfte von dem Hohlrad 435 unmittelbar auf den Planetenträger 432 übertragen. Von dort werden die Antriebskräfte unmittelbar in die Hauptabtriebswelle 419 eingeleitet.

Sollen Antriebskräfte der beiden Antriebsmotoren 405, 406 nicht mittels des Kegelreibringgetriebes 402 auf den zweiten Kräftestrang 423 sondern direkt von der Antriebswelle 414 mittels des ersten Kräftestrangs 422 auf das Planetengetriebe 403 übertragen werden, ist die Hohlradkupplung 436 geöffnet und eine Sonnenradwellenradkupplung 445 geschlossen. Hierbei werden dann Antriebskräfte von dem ersten Kräfteeingangsritzel 420 über die Sonnenradwellenkupplung 445 auf eine Sonnenradwelle 428 des Planetengetriebes 403 übertragen. Von dort aus gelangen die Antriebskräfte auf ein Sonnenrad 429, von wo aus sie auf die Planetenräder 430, 431 und weiter auf den Planetenträger 432 und der damit verbundenen Hauptabtriebswelle 419 übertragen werden.

Es versteht sich, dass einer der Motoren 405, 406 auch an der Abtriebsseite 407, beispielsweise an der Hauptabtriebswelle 419, und der andere der Motoren 405, 406 an der Eingangsseite 404 angeordnet sein können. Darüber hinaus kann auch der erste Kräftestrang 422 eine Antriebskette aufweisen, mittels welcher Antriebskräfte von dem Antriebswellenritzel 415 auf das erste Kraifteeingangsritzel 420 übertragen werden.

Die in den Figuren 6 und 7 dargestellten Antriebsanordnungen 501 und 601 zeichnen sich durch einen besonders einfachen Aufbau aus. Beide Antriebsanordnungen 501, 601 verzichten auf ein Planetengetriebe, mittels welchem beispielsweise eine Drehrichtungsumkehr realisiert werden kann.

So weist die Antriebsanordnung 501 ein Kegelreibringgetriebe 502 auf, welches einen Eingangskegel 510, einen Ausgangskegel 511 und ein Reibring 512 umfasst. Darüber hinaus umfasst die Antriebsanordnung 501 einen Verbrennungsmotor 506, der mittels einer Antriebswellenkupplung 516 an einer Antriebswelle 514 befestigt ist. Mittels der Antriebswellenkupplung 516 kann der Verbrennungsmotor 506 mit dem Kegelreibringgetriebe 502 gekoppelt bzw. von dem Kegelreibringgetriebe 502 entkoppelt werden.

Des Weiteren ist ein Elektromotor 505 an einer Abtriebswelle 517 angeordnet. Die Abtriebswelle 517 ist mit dem Ausgangskegel 511 des Kegelreibringgetriebes 502 verbunden.

In die Abtriebswelle 517 ist zwischen dem Elektromotor 505 und dem Ausgangskegel 511 eine Abtriebswellenkupplung 560 integriert, mittels welcher der Elektromotor 505 an den Ausgangskegel 511 gekoppelt oder von dem Ausgangskegel 511 entkoppelt werden kann. Der Elektromotor 505 steht mittels der Abtriebswelle 517 und eines Antriebswellenritzels 518 unmittelbar mit einem Differenzialgetriebe 508 der Antriebsanordnung 501 in Wirkkontakt.

Von dem Differenzialgetriebe 508 werden die Antriebskräfte auf eine Antriebsache 509 und von dort aus auf Antriebsräder 539 und 540 übertragen.

Bei diesem Ausführungsbeispiel wird der Rückwärtsgang durch den Elektromotor 505 realisiert, wobei das Kegelreibringgetriebe 502 nicht mitläuft, wenn lediglich der Elektromotor 505 als Antrieb genutzt wird.

Auch die in der Figur 7 gezeigte Antriebsanordnung 601 verfügt über ein Kegelreibringgetriebe 602 mit einem Eingangskegel 610, einem Ausgangskegel 611 und einem Reibring 612.

Im Unterschied zu der Antriebsanordnung 501 aus der Figur 6 sind bei der Antriebsanordnung 601 aus der Figur 7 sowohl ein Elektromotor 605 als auch ein Verbrennungsmotor 606 an einer Antriebswelle 614 des Kegelreibringgetriebes 602 angeordnet. Um sowohl den Elektromotor 605 als auch den Verbrennungsmotor 606 mit der Antriebswelle zu koppeln bzw. von der Abtriebswelle 614 zu entkoppeln, ist zwischen dem Elektromotor 605 und der Antriebswelle 614 eine Elektromotorkupplung 665 und zwischen dem Verbrennungsmotor 606 und der Antriebswelle 614 eine Verbrennungsmotorkupplung 666 vorgesehen. Auf die Elektromotorkupplung 665 kann aus Gewichtsgründen ohne Weiteres verzichtet werden verzichtet werden.

An einer Abtriebswelle 617, um welche der Ausgangskegel 611 des Kegelreibringgetriebes 602 umläuft, ist ein Abtriebswellenritzel 618 befestigt. Dieses steht mit einem Differenzialgetriebe 608 in Wirkkontakt, sodass Antriebskräfte von dem Abtriebswellenritzel 618 auf das Differenzialgetriebe 608 übertragen werden können. An dem Differenzialgetriebe 608 ist eine Antriebsachse 609 vorgesehen, welche ein erstes Antriebsrad 639 und ein zweites Antriebsrad 640 aufweist.

Es versteht sich, dass bei diesen Ausführungsbeispielen das Planetengetriebe vorzugsweise jeweils derart angesteuert ist, dass es in der bevorzugten Drehrichtung stillgelegt ist, so dass Verluste, die durch das Planetengetriebe bedingt sein könnten, minimiert werden und nur in weniger oft auftretenden Drehrichtungen auftreten.

Die in der Figur 8 weitere Antriebsanordnung 701 besteht im Wesentlichen aus einem Kegelreibringgetriebe 702 und einem Planetengetriebe 703. Antriebsseitig 704 ist an einer Antriebswelle 714 zum einen ein Elektromotor 705 und zum anderen ein Verbrennungsmotor 706 angeordnet. An der Abtriebsseite 707 ist ein Differenzialgetriebe 708 an einer Antriebsachse 709 eines hier nicht näher gezeigten Fahrzeuges vorgesehen.

Das Kegelreibringgetriebe 702 umfasst einen Eingangskegel 710, einen Ausgangskegel 711 sowie einen dazwischen angeordneten Reibring 712, der den Kontakt zwischen den beiden Kegeln 710, 712 gewährleistet. Der Eingangskegel 710 ist vorliegend an der Antriebswelle 714 gelagert, so dass der Eingangskegel 710 unmittelbar von dem Elektromotor 705 oder dem Verbrennungsmotor 706 angetrieben werden kann.

Eine Kräfteübertragung von einen der genannten Motoren 705, 706 auf eine Hauptabtriebswelle 719 der gezeigten Antriebsanordnung 701 ohne hierbei das Kegelreibringgetriebe 702 zu verwenden, kann über ein Antriebswellenritzel 715, einer ersten Antriebskette 721 und einem ersten Kräfteeingangsritzel 720 direkt übertragen werden.

Werden Antriebskräfte über das Reibringgetriebe 702 auf die Hauptabtriebswelle 719 geleitet, geschieht dies vorliegend mittels eines zweiten Kräftestrangs 723, der im Wesentlichen aus einem Abtriebswellenritzel 718, einem zweiten Kraifteeingangsritzel 724 und einer entsprechenden zweiten Antriebskette 725 besteht. Das Abtriebswellenritzel 718 ist an einer Abtriebswelle 717, mit welcher der Ausgangskegel 711 umläuft, angeordnet. Mittels der Antriebskette 725 wird eine Verbindung zwischen dem Abtriebswellenritzel 718 und dem Kräfteeingangsritzel 724 hergestellt.

Wird eine direkte Kraftübertragung zwischen der Antriebswelle 714 und der Hauptabtriebswelle 719 angestrebt, wird eine Hohlradkupplung 736 aktiviert, das heißt, auf diese Weise werden die Antriebskräfte von dem ersten Kräfteeingangsritzel 720 auf ein Hohlrad 735 des hier verwendeten Planetengetriebes 703 übertragen. Die Antriebskräfte werden hierbei auf Planetenräder 730 und 731 sowie von diesen weiter auf ein Sonnenrad 729 übertragen. Von dort aus werden die Antriebskräfte weiter auf eine Sonnenradwelle 728 übertragen und gelangen bei einer geschlossenen Planetenträgerkupplung 748 über einen Planetenträger 732 auf die Hauptantriebswelle 719 und von dort über das Hauptabtriebsritzel 737 der Hauptabtriebswelle 719 an das Differenzialgetriebe 708.

Erfolgt der Kräftefluss über das Kegelreibringgetriebe 702, ist die Hohlradkupplung 736 nicht geschlossen sondern geöffnet und die Planetenradträgerkupplung 748 geschlossen. Hierbei gelangen die Antriebskräfte mittels des zweiten Kräftestrangs 723 an die Sonnenradwelle 728 und über die Hohlradkupplung 748 auf die Hauptabtriebswelle 719. Von dort aus gelangen die Antriebskräfte über das Hauptabtriebsritzel 737 weiter an das Differenzialgetriebe 708.

Durch Öffnen der Planetenträgerkupplung 748 kann die Drehrichtung umgekehrt und ein Rückwärtsgang der Antriebsanordnung 701 realisiert werden. Da der Rückwärtsgang in der Praxis nur kurzzeitig genutzt wird, sind durch das Planetengetriebe 703 verursachte Leistungsverluste vertretbar.

Die Antriebsanordnung 801 aus der Figur 9 umfasst im Wesentlichen ein Kegelreibringgetriebe 802 und ein Planetengetriebe 803. An seiner Antriebsseite 804 weist die Antriebsanordnung 801 einen Elektromotor 805 und einen Verbrennungsmotor 806 auf. Der Verbrennungsmotor 806 kann mittels einer Antriebswellenkupplung 816 von vorliegender Antriebswelle 814 entkoppelt werden. An dieser Antriebswelle 814 sind auch ein Antriebswellenritzel 815 und ein Eingangskegel 810 des Kegelreibringgetriebes befestigt.

An einer Abtriebsseite 807 der Antriebsanordnung 801 ist ein Differenzialgetriebe 808 an einer Antriebsachse 809 mit einem ersten Antriebsrad 839 und einem zweiten Antriebsrad 840 vorgesehen.

Das Differentialgetriebe 808 ist mittels eines Hauptabtriebsritzels 837 mit einer Hauptabtriebswelle 819 verbunden, welche über einen ersten Kräftestrang 822 und/oder einem zweiten Kräftestrang 823 mit der Antriebsseite 804 der vorliegenden Antriebsanordnung 801 verbunden werden kann.

Hinsichtlich des ersten Kräftestrangs 822 kämmt das Antriebswellenritzel 815 mit einem ersten Kräfteeingangsritzel 820, welches mittels einer Hohlradkupplung 836 mit einem Hohlrad 835 des Planetengetriebes 803 in Kontakt stehen kann. Ist die Hohlradkupplung 836 geschlossen, werden die Kräfte auf das Hohlrad 835 des Planetengetriebes 803 übertragen und von dort aus mittels eines ersten Planetenrads 830 und eines zweiten Planetenrads 831 weiter auf ein Sonnenrad 829, welches an der Hauptabtriebswelle 819 befestigt ist, übertragen.

Die Planetenräder 830, 831 sind auf einem Planetenradträger 832 befestigt, der eine Planetenradträgerkupplung 834 umfasst und mittels dieser direkt mit der Hauptabtriebswelle 819 in Kontakt treten kann.

An dem Planetenradträger 832 ist unmittelbar ein zweites Kräfteeingangsritzel 824 befestigt, welches Bestandteil des zweiten Kräftestrangs 823 ist. Sollen Antriebskräfte über diesen zweiten Kräftestrang 823 von einem der beiden Motoren 805, 806 auf die Hauptabtriebswelle 819 übertragen werden, wird die Hohlradkupplung 836 geöffnet, so dass der Kraiftefluss über den Eingangskegel 810 des Kegelreibringgetriebes 802, über den Reibring 812 des Kegelreibringgetriebes 802 auf einen Ausgangskegel 811 des Kegelreibringgetriebes 802 und hierbei auf eine Abtriebswelle 817 des Kegelreibringgetriebes 802 übertragen werden kann. An der Abtriebswelle 817 ist ein Abtriebswellenritzel 818 des zweiten Kräftestrangs 823 befestigt. Mittels einer Antriebskette 825 werden die Antriebskräfte von dem Abtriebswellenritzel 818 auf das zweite Kräfteeingangsritzel 824 übertragen und gelangen somit über das Planetenradgetriebe 803 ebenfalls an die Hauptabtriebswelle 819.

Eine Drehrichtungsumkehr kann an der Hauptabtriebswelle 819 mittels des Planetengetriebes 803 erzielt werden, indem die Planetenradträgerkupplung 834 geöffnet oder geschlossen wird.

Die in der Figur 10 gezeigte alternative Antriebsanordnung 901 umfasst ein Kegelreibringgetriebe 902 und ein Planetengetriebe 903.

Das Kegelreibringgetriebe 902 besteht in diesem Ausführungsbeispiel aus einem Eingangskegel 910, einem Ausgangskegel 911 und einem Reibring 912, der den Kontakt zwischen dem Eingangskegel 910 und dem Ausgangskegel 911 gewährleistet. Der Eingangskegel 910 läuft mit einer Antriebswelle 914 um, an welcher ein Elektromotor 905 sowie ein Verbrennungsmotor 906 zuschaltbar gelagert sind. Zwischen dem Verbrennungsmotor 906 und der Antriebswelle 914 ist zusätzlich eine Antriebswellenkupplung 916 geschaltet. Die Antriebswelle 914 weist darüber hinaus ein Antriebswellenritzel 915 auf.

Der Ausgangskegel 911 läuft mit einer Abtriebswelle 917 um, an deren einem Ende ein Abtriebswellenritzel 918 angeordnet ist.

Das Planetengetriebe 903 weist ein Sonnenrad 929 auf, welches Bestandteil einer Hauptabtriebswelle 919 der Antriebsanordnung 901 ist. Des Weiteren weist das Planetengetriebe 903 einen an einem Getriebegehäuse 933 feststellbaren Planetenradträger 932 auf.

Das Sonnenrad 929 kämmt mit Planetenrädern 930 und 931, die wiederum mit einem Hohlrad 935 des Planetengetriebes 903 in Kontakt stehen.

Der Planetenradträger 932 steht mittels einer Planetenradträgerkupplung 934 mit einem ersten Kräfteeingangsritzel 920 der Hauptabtriebswelle 919 in Kontakt. Das erste Kräfteeingangsritzel 920 bildet mit dem Antriebswellenritzel 915 einen ersten Kräftestrang 922, mittels welchem Antriebskräfte von der Antriebswelle 914 auf die Hauptabtriebswelle 919 übertragen werden können. Hierzu muss aber die Planetenradträgerkupplung 934 geschlossen sein, wobei der Kräftefluss dann nicht über das Kegelreibringgetriebe 902 geleitet wird.

Die vorliegende Antriebsanordnung 901 verfügt über einen zweiten Kräftestrang 923, der sich im Wesentlichen aus dem bereits erwähnten Abtriebswellenritzel 918, einer Antriebskette 925 und einem zweiten Kräfteeingangsritzel 924 gebildet ist. Das zweite Kräfteeingangsritzel 924 ist vorliegend unmittelbar an einer Hohlradwelle 950 des Hohlrades 935 befestigt.

Je nach gewünschter Drehrichtung der Hauptabtriebswelle 919 wird eine Hohlradkupplung 936 geschlossen oder geöffnet. Die so an die Hauptabtriebswelle 919 übertragenen Antriebskräfte werden mittels eines Hauptabtriebsritzels 937 auf ein Differenzialgetriebe 908 geleitet. Von diesem Differenzialgetriebe 908 gelangen die Kräfte auf eine Antriebsachse 909 mit einem ersten Antriebsrad 939 und einem zweiten Antriebsrad 940.

### Bezugsziffernliste:

- 1: Antriebsanordnung
- 2: Kegelreibringgetriebe
- 3: Planetengetriebe
- 4: Antriebsseite
- 5: Elektromotor
- 6: Verbrennungsmotor
- 7: Abtriebsseite
- 8: Differenzialgetriebe
- 9: Antriebsachse
- 10: Eingangskegel
- 11: Ausgangskegel
- 12: Reibring
- 13: Spalt
- 14: Antriebswelle
- 15: Antriebswellenritzel
- 16: Antriebswellenkupplung
- 17: Abtriebswelle
- 18: Abtriebswellenritzel
- 19: Hauptabtriebswelle
- 20: erstes Kräfteeingangsritzel
- 21: erste Antriebskette
- 22: erster Kräftestrang
- 23: zweiter Kräftestrang
- 24: zweites Kräfteeingangsritzel
- 25: zweite Antriebskette
- 26: Antriebswellendrehrichtung
- 27: Hauptabtriebswellendrehrichtung
- 28: Sonnenradwelle
- 29: Sonnenrad
- 30: erstes Planetenrad
- 31: zweites Planetenrad
- 32: Planetenradträger
- 33: Getriebegehäuse
- 34: Planetenradträgerkupplung
- 35: Hohlrad
- 36: Hohlradkupplung
- 37: Hauptabtriebsritzel
- 38: entgegengesetzte Hauptabtriebswellendrehrichtung
- 39: erstes Antriebsrad
- 40: zweites Antriebsrad
- 101: Antriebsanordnung
- 102: Kegekeibringgetriebe
- 103: Planetengetriebe
- 105: Elektromotor
- 106: Verbrennungsmotor
- 108: Differenzialgetriebe
- 109: Antriebsachse
- 110: Eingangskegel
- 111: Ausgangskegel
- 112: Reibring
- 114: Antriebswelle
- 115: Antriebswellenritzel
- 116: Antriebswellenkupplung
- 117: Abtriebswelle
- 118: Abtriebswellenritzel
- 119: Hauptabtriebswelle
- 120: erstes Kräfteeingangsritzel
- 122: erster Kräftestrang
- 124: zweites Kräfteeingangsritzel
- 125: Antriebskette
- 126: Antriebswellendrehrichtung
- 128: Sonnenradwelle
- 129: Sonnenrad
- 130: erstes Planetenrad
- 131: zwei tes Planetenrad
- 132: Planetenradträger
- 133: Getriebegehäuse
- 134: Planetenradträgerkupplung
- 135: Hohlrad
- 136: Hohlradkupplung
- 137: Hauptabtriebsritzel
- 138: entgegengesetzte Hauptabtriebswellendrehrichtung
- 139: erstes Antriebsrad
- 140: zweites Antriebsrad
- 201: Antriebsanordnung
- 202: Kegelreibringgetriebe
- 203: Planetengetriebe
- 205: Elektromotor
- 206: Verbrennungsmotor
- 208: Differenzialgetriebe
- 209: Antriebsachse
- 210: Eingangskegel
- 211: Ausgangskegel
- 212: Reibring
- 214: Antriebswelle
- 215: Antriebswellenritzel
- 216: Antriebswellenkupplung
- 217: Abtriebswelle
- 218: Abtriebswellenritzel
- 219: Hauptabtriebswelle
- 220: erstes Kräfteeingangsritzel
- 222: erster Kräftestrang
- 223: zweiter Kräftestrang
- 225: Antriebskette
- 228: Sonnenradwelle
- 229: Sonnenrad
- 230: erstes Planetenrad
- 231: zweites Planetenrad
- 232: Planetenradträger
- 235: Hohlrad
- 236: Hohlradkupplung
- 239: erstes Antriebsrad
- 240: zweites Antriebsrad
- 245: Sonnenradwellenkupplung
- 246: Hohlradinnenverzahnung
- 247: Hohlradaußenverzahnung
- 248: Planetenradträgerritzel
- 301: Antriebsanordnung
- 302: Kegelreibringgetriebe
- 303: Planetengetriebe
- 304: Antriebsseite
- 305: Elektromotor
- 306: Verbrennungsmotor
- 307: Abtriebsseite
- 308: Differenzialgetriebe
- 309: Antriebsachse
- 310: Eingangskegel
- 311: Ausgangskegel
- 312: Reibring
- 314: Antriebswelle
- 315: Antriebswellenritzel
- 316: Antriebswellenkupplung
- 317: Abtriebswelle
- 318: Abtriebswellenritzel
- 319: Hauptabtriebswelle
- 320: erstes Kräfteeingangsritzel
- 322: erster Kräftestrang
- 323: zweiter Kräftestrang
- 324: zweites Kräfteeingangsritzel
- 325: Antriebskette
- 328: Sonnenradwelle
- 329: Sonnenrad
- 330: erstes Planetenrad
- 331: zweites Planetenrad
- 332: Planetenradträger
- 335: Hohlrad
- 336: Hohlradkupplung
- 337: Hauptabtriebsritzel
- 339: erstes Antriebsrad
- 340: zweites Antriebsrad
- 401: Antriebsanordnung
- 402: Kegelreibringgetriebe
- 403: Planetengetriebe
- 404: Antriebsseite
- 405: Elektromotor
- 406: Verbrennungsmotor
- 407: Abtriebsseite
- 408: Differenzialgetriebe
- 410: Eingangskegel
- 411: Ausgangskegel
- 412: Reibring
- 414: Antriebswelle
- 415: Antriebswellenritzel
- 416: Antriebswellenkupplung
- 417: Abtriebswelle
- 418: Abtriebswellenritzel
- 419: Hauptabtriebswelle
- 420: erstes Kräfteeingangsritzel
- 422: erster Kräftestrang
- 423: zweiter Kräftestrang
- 424: zweites Kräfteeingangsritzel
- 425: Antriebskette
- 428: Sonnenradwelle
- 429: Sonnenrad
- 430: erstes Planetenrad
- 431: zweites Planetenrad
- 432: Planetenradträger
- 435: Hohlrad
- 436: Hohlradkupplung
- 437: Hauptabtriebsritzel
- 445: Sonnenradwellenkupplung
- 446: Hohlradinnenverzahnung
- 450: Hohlradwelle
- 501: Antriebsanordnung
- 502: Kegelreibringgetriebe
- 505: Elektromotor
- 506: Verbrennungsmotor
- 508: Differenzialgetriebe
- 509: Antriebsachse
- 510: Eingangskegel
- 511: Ausgangskegel
- 512: Reibring
- 516: Antriebswellenkupplung
- 517: Abtriebswelle
- 518: Abtriebswellenritzel
- 539: erstes Antriebsrad
- 540: zweites Antriebsrad
- 560: Abtriebswellenkupplung
- 601: Antriebsanordnung
- 602: Kegelreibringgetriebe
- 605: Elektromotor
- 606: Verbrennungsmotor
- 608: Differenzialgetriebe
- 609: Antriebsachse
- 610: Eingangskegel
- 611: Ausgangskegel
- 612: Reibring
- 614: Antriebswelle
- 617: Abtriebswelle
- 618: Abtriebswellenritzel
- 639: erstes Antriebsrad
- 640: zweites Abtriebsrad
- 665: Elektromotorkupplung
- 666: Verbrennungsmotorkupplung
- 701: Antriebsanordnung
- 702: Kegelreibringgetriebe
- 703: Planetengetriebe
- 704: Antriebsseite
- 705: Elektromotor
- 706: Verbrennungsmotor
- 707: Abtriebsseite
- 708: Differenzialgetriebe
- 709: Antriebsachse
- 710: Eingangskegel
- 711: Ausgangskegel
- 712: Reibring
- 714: Antriebswelle
- 715: Antriebswellenritzel
- 716: Antriebswellenkupplung
- 717: Abtriebswelle
- 718: Abtriebswellenritzel
- 719: Hauptabtriebswelle
- 720: erstes Kräfteeingangsritzel
- 721: erste Antriebskette
- 722: erster Kräftestrang
- 723: zweiter Kräftestrang
- 724: zweites Kräfteeingangsritzel
- 725: zweite Antriebskette
- 728: Sonnenradwelle
- 729: Sonnenrad
- 730: erstes Planetenrad
- 731: zweites Planetenrad
- 732: Planetenradträger
- 735: Hohlrad
- 736: Hohlradkupplung
- 737: Hauptabtriebsritzel
- 748: Planetenradträgerkupplung
- 801: Antriebsanordnung
- 802: Kegelreibringgetriebe
- 803: Planetengetriebe
- 804: antriebsseitig
- 805: Elektromotor
- 806: Verbrennungsmotor
- 807: Abtriebsseite
- 808: Differenzialgetriebe
- 809: Antriebsachse
- 810: Eingangskegel
- 811: Ausgangskegel
- 812: Reibring
- 814: Antriebswelle
- 815: Antriebswellenritzel
- 816: Antriebswellenkupplung
- 817: Abtriebswelle
- 818: Abtriebswellenritzel
- 819: Hauptabtriebswelle
- 820: erstes Kräfteeingangsritzel
- 822: erster Kräftestrang
- 823: zweiter Kräftestrang
- 824: zweites Kräfteeingangsritzel
- 825: Antriebskette
- 829: Sonnenrad
- 830: erstes Planetenrad
- 831: zweites Planetenrad
- 832: Planetenradträger
- 834: Planetenradträgerkupplung
- 835: Hohlrad
- 836: Hohlradkupplung
- 837: Hauptabtriebsritzel
- 839: erstes Antriebsrad
- 840: zweites Antriebsrad
- 901: Antriebsanordnung
- 902: Kegelreibringgetriebe
- 903: Planetengetriebe
- 905: Elektromotor
- 906: Verbrennungsmotor
- 908: Differenzialgetriebe
- 909: Antriebsachse
- 910: Eingangswelle
- 911: Ausgangswelle
- 912: Reibring
- 914: Antriebswelle
- 915: Antriebswellenritzel
- 916: Antriebswellenkupplung
- 917: Abtriebswelle
- 918: Abtriebswellenritzel
- 919: Hauptabtriebswelle
- 920: erstes Kraifteeingangsritzel
- 922: erster Kräftestrang
- 923: zweiter Kräftestrang
- 924: zweites Kräfteeingangsritzel
- 925: Antriebskette
- 929: Sonnenrad
- 930: erstes Planetenrad
- 931: zweites Planetenrad
- 932: Planetenradträger
- 933: Getriebegehäuse
- 934: Planetenradträgerkupplung
- 935: Hohlrad
- 936: Hohlradkupplung
- 937: Hauptabtriebsritzel
- 939: erstes Antriebsrad
- 940: zweites Antriebsrad
- 950: Hohlradwelle

## Patentansprüche

1. Antriebsanordnung (1, 101, 201, 301, 401, 501, 601, 701, 801, 901) mit einem stufenlos einstellbaren Kegelreibringgetriebe (2, 102, 202, 302, 402, 502, 602, 702, 802, 902) als Teilgetriebe, welches zwei umlaufende Kegel (10, 11; 110, 111; 210, 211; 310, 311; 410, 411; 510, 511; 610, 611; 710, 711; 810, 811; 910, 911) aufweist, die mittels eines umlaufenden Reibrings (12, 112, 212, 312, 412, 512, 612, 712, 812, 912) miteinander wirkverbunden sind, mit einem Hybridantrieb, der einen ersten Antrieb und wenigstens einen weiteren Antrieb umfasst, sowie mit wenigstens einem Abtrieb, **dadurch gekennzeichnet, dass** wenigstens einer der beiden Antriebe entweder unmittelbar oder mittelbar mittels des stufenlos einstellbaren Teilgetriebes mit dem Abtrieb wechselwirksam verbunden ist, wobei der erste Antrieb und/oder der weitere Antrieb eine erste Antriebsrichtung (26) ermöglichen und der weitere Antrieb eine von der ersten Antriebsrichtung verschiedene, weitere Antriebsrichtung (26, 38) ermöglicht.

2. Antriebsanordnung nach Anspruch 1, **dadurch gekennzeichnet, dass** der weitere Antrieb zuschaltbar an der Antriebswelle (14; 314; 414; 714; 814; 914) gelagert ist.

3. Antriebsanordnung nach Anspruch 1 oder 2, **dadurch gekennzeichnet, dass** der weitere Antrieb entweder unmittelbar oder mittelbar mittels des stufenlos einstellbaren Kegelreibringgetriebes (2, 102, 202, 302, 402, 502, 602, 702, 802, 902) mit dem Abtrieb (7; 407; 707; 807) wechselwirksam verbunden ist.

4. Antriebsanordnung nach einem der vorstehenden Ansprüche, **dadurch gekennzeichnet, dass** der erste Antrieb ein Verbrennungsmotor (6; 306; 406; 706; 806; 906) und/oder der weitere Antrieb ein Elektromotor (5; 305; 405; 705; 805; 905) ist.

5. Antriebsanordnung nach einem der vorstehenden Ansprüche, **dadurch gekennzeichnet, dass** der weitere Antrieb unter Umgehung des stufenlos einstellbaren Kegelreibringgetriebes (2, 102, 202, 302, 402, 502, 602, 702, 802, 902) anfährt.

6. Antriebsanordnung nach einem der vorstehenden Ansprüche, **dadurch gekennzeichnet, dass** das stufenlos einstellbare Kegelreibringgetriebe (2, 102, 202, 302, 402, 502, 602, 702, 802, 902) zwischen dem ersten Antrieb und dem weiteren Antrieb angeordnet ist.

7. Antriebsanordnung nach einem der vorstehenden Ansprüche, **dadurch gekennzeichnet, dass** eine Starteinrichtung sowie ein zu startender Antrieb mittels des stufenlos einstellbaren Kegelreibringgetriebes (2, 102, 202, 302, 402, 502, 602, 702, 802, 902) synchronisiert sind.

8. Antriebsanordnung nach einem der vorstehenden Ansprüche, **dadurch gekennzeichnet, dass** das stufenlos einstellbare Kegelreibringgetriebe (2, 102, 202, 302, 402, 502, 602, 702, 802, 902) unmittelbar und/oder mittelbar mit einem Sonnenrad (29) eines Planetengetriebes (3) in Wirkkontakt steht.

9. Antriebsanordnung nach einem der vorhergehenden Ansprüche, **dadurch gekennzeichnet, dass** der weitere Antrieb zum Anfahren genutzt wird, während der zweite der beiden Antriebe ausgekuppelt ist.

10. Antriebsanordnung nach einem der vorhergehenden Ansprüche, **dadurch gekennzeichnet, dass** zwischen wenigstens einem Antrieb und einem Abtrieb des Getriebes (1) ein Planetengetriebe (3) angeordnet ist.

11. Antriebsanordnung nach einem der vorhergehenden Ansprüche, **dadurch gekennzeichnet, dass** die weitere Antriebsrichtung (38) wenigstens einen Rückwärtsgang realisiert.

12. Antriebsanordnung nach einem der vorhergehenden Ansprüche, **dadurch gekennzeichnet, dass** der weitere Antrieb eine Starteinrichtung für den zweiten der beiden Antriebe ist.

13. Antriebsanordnung nach einem der vorhergehenden Ansprüche, **dadurch gekennzeichnet, dass** zwischen dem ersten Antrieb und dem Abtrieb und/oder zwischen dem weiteren Antrieb und dem Abtrieb eine Kupplung (16, 34, 36) angeordnet ist.

14. Antriebsanordnung nach einem der vorhergehenden Ansprüche, **dadurch gekennzeichnet, dass** zwischen dem ersten Antrieb und dem Abtrieb und/oder zwischen dem weiteren Antrieb und dem Abtrieb eine Kette (21, 25) oder ein Antriebsriemen angeordnet ist.

15. Antriebsanordnung nach einem der vorhergehenden Ansprüche, **dadurch gekennzeichnet, dass** zwischen dem ersten Antrieb und dem Abtrieb und/oder zwischen dem weiteren Antrieb und dem Abtrieb unmittelbar miteinander kämmende Zahnräder (115, 120) angeordnet sind.

## Claims

1. A drive arrangement (1, 101, 201, 301, 401, 501, 601, 701, 801, 901) with an infinitely variable conical friction ring gearbox (2, 102, 202, 302, 402, 502, 602, 702, 802, 902) as sub gearbox, which has two rotating cones (10, 11; 110, 111; 210, 211; 310, 311; 410, 411; 510, 511; 610, 611; 710, 711; 810, 811; 910, 911) which are in each case operatively connected to one another by means of a rotating friction ring (12, 112, 212, 312, 412, 512, 612, 712, 812, 912), with a hybrid drive which comprises a first drive and at least one further drive, and also with at least one output, **characterised in that** at least one of the two drives is interactively connected to the output either directly or indirectly by means of the infinitely variable sub gearbox, wherein the first drive and/or the further drive allow a first drive direction (26) and the further drive allows a further drive direction (26, 38) different from the first drive direction.

2. The drive arrangement according to Claim 1, **characterised in that** the further drive is mounted on the drive shaft (14; 314; 414; 714; 814; 914) in a disengageable manner.

3. The drive arrangement according to Claim 1 or 2, **characterised in that** the further drive is interactively connected to the output (7; 407; 707; 807) either directly or indirectly by means of the infinitely variable conical friction ring gearbox (2, 102, 202, 302, 402, 502, 602, 702, 802, 902).

4. The drive arrangement according to one of the preceding claims, **characterised in that** the first drive is an internal combustion engine (6; 306; 406; 706; 806; 906) and/or the further drive is an electric motor (5; 305; 405; 705; 805; 905).

5. The drive arrangement according to one of the preceding claims, **characterised in that** the further drive starts whilst circumventing the infinitely variable conical friction ring gearbox (2, 102, 202, 302, 402, 502, 602, 702, 802, 902).

6. The drive arrangement according to one of the preceding claims, **characterised in that** the infinitely variable conical friction ring gearbox (2, 102, 202, 302, 402, 502, 602, 702, 802, 902) is arranged between the first drive and the further drive.

7. The drive arrangement according to one of the preceding claims, **characterised in that** a starting apparatus and also a drive to be started are synchronised by means of the infinitely variable conical friction ring gearbox (2, 102, 202, 302, 402, 502, 602, 702, 802, 902).

8. The drive arrangement according to one of the preceding claims, **characterised in that** the infinitely variable conical friction ring gearbox (2, 102, 202, 302, 402, 502, 602, 702, 802, 902) is directly or indirectly in operative contact with a sun gear (29) of a planetary gearbox (3).

9. The drive arrangement according to one of the preceding claims, **characterised in that** the further drive is used for starting whilst the second of the two drives is disengaged.

10. The drive arrangement according to one of the preceding claims, **characterised in that** a planetary gearbox (3) is arranged between at least one drive and an output of the gearbox (1).

11. The drive arrangement according to one of the preceding claims, **characterised in that** the further drive direction (38) realises at least one reverse gear.

12. The drive arrangement according to one of the preceding claims, **characterised in that** the further drive is a starting apparatus for the second of the two drives.

13. The drive arrangement according to one of the preceding claims, **characterised in that** a clutch (16, 34, 36) is arranged between the first drive and the output and/or between the further drive and the output.

14. The drive arrangement according to one of the preceding claims, **characterised in that** a chain (21, 25) or a drive belt is arranged between the first drive and the output and/or between the further drive and the output.

15. The drive arrangement according to one of the preceding claims, **characterised in that** directly mutually meshing gear wheels (115, 120) are arranged between the first drive and the output and/or between the further drive and the output.

## Revendications

1. Dispositif d'entraînement (1, 101, 201, 301, 401, 501, 601, 701, 801, 901) comprenant un engrenage à bague d'entraînement conique (2, 102, 202, 302, 402, 502, 602, 702, 802, 902) réglable progressivement comme engrenage partiel, qui présente deux cônes périphériques (10, 11 ; 110, 111 ; 210, 211 ; 310, 311 ; 410, 411 ; 510, 511 ; 610, 611 ; 710, 711 ; 810, 811 ; 910, 911), qui sont reliés les uns aux autres de façon active au moyen d'une bague de friction périphérique (12, 112, 212, 312, 412, 512, 612, 712, 812, 912), dotée d'un entraînement hybride, qui comprend un premier entraînement et au moins un autre entraînement, et d'au moins une sortie, **caractérisé en ce qu'**au moins l'un des deux entraînements est relié de façon interactive à la sortie soit directement soit indirectement au moyen de l'engrenage partiel réglable de façon progressive, le premier entraînement et/ou l'autre entraînement permettant un premier sens d'entraînement (26) et l'autre entraînement permettant un autre sens d'entraînement (26, 38) différent du premier sens d'entraînement.

2. Dispositif d'entraînement selon la revendication 1, **caractérisé en ce que** l'autre entraînement est monté sur l'arbre d'entraînement (14 ; 314 ; 414 ; 714 ; 814 ; 914) de façon à pouvoir être mis en circuit.

3. Dispositif d'entraînement selon la revendication 1 ou 2, **caractérisé en ce que** l'autre entraînement est relié de façon interactive à la sortie (7 ; 407 ; 707 ; 807) soit directement soit indirectement au moyen de l'engrenage à bague d'entraînement conique (2, 102, 202, 302, 402, 502, 602, 702, 802, 902) réglable de façon progressive.

4. Dispositif d'entraînement selon l'une des revendications précédentes, **caractérisé en ce que** le premier entraînement est un moteur à combustion (6 ; 306 ; 406 ; 706 ; 806 ; 906) et/ou l'autre entraînement un moteur électrique (5 ; 305 ; 405 ; 705 ; 805 ; 905).

5. Dispositif d'entraînement selon l'une des revendications précédentes, **caractérisé en ce que** l'autre entraînement démarre en contournant l'engrenage à bague de friction conique (2, 102, 202, 302, 402, 502, 602, 702, 802, 902) réglable de façon progressive.

6. Dispositif d'entraînement selon l'une des revendications précédentes, **caractérisé en ce que** l'engrenage à bague de friction conique (2, 102, 202, 302, 402, 502, 602, 702, 802, 902) réglable de façon progressive est disposé entre le premier entraînement et l'autre entraînement.

7. Dispositif d'entraînement selon l'une des revendications précédentes, **caractérisé en ce qu'**un système de démarrage et un entraînement à démarrer sont synchronisés au moyen de l'engrenage à bague de friction conique (2, 102, 202, 302, 402, 502, 602, 702, 802, 902) réglable de façon progressive.

8. Dispositif d'entraînement selon l'une des revendications précédentes, **caractérisé en ce que** l'engrenage à bague d'entraînement conique (2, 102, 202, 302, 402, 502, 602, 702, 802, 902) réglable de façon progressive est en contact actif directement et/ou indirectement avec une roue solaire (29) d'un engrenage planétaire (3).

9. Dispositif d'entraînement selon l'une des revendications précédentes, **caractérisé en ce que** l'autre entraînement est utilisé pour le démarrage, alors que le second des deux entraînements est désaccouplé.

10. Dispositif d'entraînement selon l'une des revendications précédentes, **caractérisé en ce qu'**un engrenage planétaire (3) est disposé entre au moins un entraînement et une sortie de l'entraînement (1).

11. Dispositif d'entraînement selon l'une des revendications précédentes, **caractérisé en ce que** l'autre sens d'entraînement (38) réalise au moins une marche arrière.

12. Dispositif d'entraînement selon l'une des revendications précédentes, **caractérisé en ce que** l'autre entraînement est un dispositif de démarrage pour le second des deux entraînements.

13. Dispositif d'entraînement selon l'une des revendications précédentes, **caractérisé en ce qu'**un accouplement (16, 34, 36) est disposé entre le premier entraînement et la sortie et/ou entre l'autre entraînement et la sortie.

14. Dispositif d'entraînement selon l'une des revendications précédentes, **caractérisé en ce qu'**une chaîne (21, 25) ou une courroie d'entraînement est disposée entre le premier entraînement et la sortie et/ou entre l'autre entraînement et la sortie.

15. Dispositif d'entraînement selon l'une des revendications précédentes, **caractérisé en ce que** des roues crantées (115, 120) s'imbriquant directement les unes avec les autres sont disposées entre le premier entraînement et la sortie et/ou entre l'autre entraînement et la sortie.
